(19) Europäisches Patentamt / European Patent Office / Office européen des brevets

(11) **EP 4 024 905 B1**

(12) **EUROPEAN PATENT SPECIFICATION**

(45) Date of publication and mention
of the grant of the patent:
**21.08.2024 Bulletin 2024/34**

(21) Application number: **20868953.9**

(22) Date of filing: **16.09.2020**

(51) International Patent Classification (IPC):
**H04W 4/02** *(2018.01)* **H04W 4/021** *(2018.01)*

(52) Cooperative Patent Classification (CPC):
**H04W 4/48; G01S 5/0284; H04W 4/021;**
G01S 5/12; G01S 2205/00; G01S 2205/01

(86) International application number:
**PCT/CN2020/115446**

(87) International publication number:
**WO 2021/057561 (01.04.2021 Gazette 2021/13)**

(54) **COMMUNICATION CONNECTION METHOD AND APPARATUS, AND STORAGE MEDIUM**

KOMMUNIKATIONSVERBINDUNGSVERFAHREN UND -VORRICHTUNG SOWIE SPEICHERMEDIUM

PROCÉDÉ ET APPAREIL DE CONNEXION DE COMMUNICATION ET SUPPORT DE STOCKAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.09.2019 CN 201910906017**

(43) Date of publication of application:
**06.07.2022 Bulletin 2022/27**

(73) Proprietor: **Huawei Technologies Co., Ltd.
Longgang District
Shenzhen,
Guangdong 518129 (CN)**

(72) Inventors:
• **XIONG, Liudong
Shenzhen, Guangdong 518129 (CN)**
• **JIANG, Zhongyin
Shenzhen, Guangdong 518129 (CN)**

(74) Representative: **Isarpatent
Patent- und Rechtsanwälte Barth
Charles Hassa Peckmann & Partner mbB
Friedrichstrasse 31
80801 München (DE)**

(56) References cited:
CN-A- 104 735 263      CN-A- 105 450 874
CN-A- 106 375 950      US-A1- 2011 300 843
US-A1- 2017 120 868    US-A1- 2017 276 764
US-A1- 2017 327 079    US-A1- 2018 213 355

• "Method and apparatus to enhance safety on vehicles by adjusting functionalities on mobile devices ED - Darl Kuhn", IP.COM, IP.COM INC., WEST HENRIETTA, NY, US, 25 March 2014 (2014-03-25), XP013162096, ISSN: 1533-0001

## Description

Priority is claimed to Chinese Patent Application No. 201910906017.6, filed with the China National Intellectual Property Administration on September 24, 2019 and entitled "COMMUNICATION CONNECTION METHOD, APPARATUS, AND STORAGE MEDIUM".

## TECHNICAL FIELD

This disclosure relates to the field of communications technologies, and in particular, the invention relates to a communication connection method, an apparatus, and a storage medium.

## BACKGROUND

Generally, a center console is arranged in a cab of a vehicle, and the center console may carry an instrument panel, an air conditioner, in-vehicle infotainment, a storage box, and the like. The in-vehicle infotainment may be specifically a vehicle-mounted infotainment product, and may implement information communication between a person and the vehicle and between vehicles.

In the conventional technology, the in-vehicle infotainment may establish a connection to and communicate with a terminal. For example, at a current moment, the in-vehicle infotainment is preferentially automatically connected to a terminal that is most recently connected to the in-vehicle infotainment. However, a terminal that most needs to establish a connection to the in-vehicle infotainment at the current moment may not be the terminal that establishes the connection to the in-vehicle infotainment most recently. In this case, the terminal that most needs to establish the connection to the in-vehicle infotainment at the current moment cannot be connected to the in-vehicle infotainment.

US 2017/276764 A1 relates to the system for outputting of audio and or visual content. It discloses the output of audio or visual content via local mobile user devices, such as a mobile phone and/or a headset, or via output devices, such as a speaker and/or a display, is controlled by a controller. The output devices are located at different locations within the interior of a car. The controller determines information on a location within the environment of each of the mobile user devices based on wireless signals received from the user devices, such as Bluetooth low energy signals, and controls the output of the content based on this.

## SUMMARY

The object of the present invention is to provide a communication connection method, an apparatus, and a storage medium, to improve convenience of connecting a driver terminal to a vehicle-mounted device. This object is solved by the attached independent claims and further embodiments and improvements of the invention are listed in the attached dependent claims. Hereinafter, up to the "brief description of the drawings", expressions like "... aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

According to a first aspect according to the invention, the invention provides a communication connection method. The method includes: A vehicle-mounted device detects a wireless signal sent by at least one terminal in a vehicle, determines position information of the at least one terminal relative to the vehicle-mounted device based on the wireless signal, determines a driver terminal in the at least one terminal based on the position information of the at least one terminal relative to the vehicle-mounted device, and establishes a communication connection to the driver terminal, wherein the determining a driver terminal in the at least one terminal based on the position information of the at least one terminal relative to the vehicle-mounted device comprises: determining, based on the position information of the at least one terminal relative to the vehicle-mounted device, whether the terminal is in a driver position area, wherein the terminal is determined to be in a driver position area when it is determined that it has moved from the driver's side front door to the driver position; and if the terminal is determined to be in the driver position area, determining the terminal as the driver terminal. Compared with the conventional technology in which the vehicle-mounted device is preferentially automatically connected to a terminal that is most recently connected to the vehicle-mounted device, the solution provided in this embodiment can avoid a problem that the vehicle-mounted device is still connected to the terminal that is most recently connected to the vehicle-mounted device when the terminal is not a current driver terminal. In other words, the vehicle-mounted device is connected only to the driver terminal each time. To be specific, the vehicle-mounted device is connected only to a terminal that most needs to be connected to the vehicle-mounted device each time. This reduces a connection operation of a driver, and improves convenience of connecting the driver terminal to the vehicle-mounted device.

In a possible design, the position information includes an angle and a distance.

In a possible design, determining an angle of the at least one terminal relative to the vehicle-mounted device based on the wireless signal includes: determining the angle of the at least one terminal relative to the vehicle-mounted device based on an angle of arrival and/or an angle of departure of the wireless signal.

In a possible design, determining a distance of the at least one terminal relative to the vehicle-mounted device based on the wireless signal includes: determining the distance of the at least one terminal relative the vehicle-mounted device based on signal strength of the wireless signal.

In a possible design, determining a distance of the at least one terminal relative to the vehicle-mounted device based on the wireless signal includes: determining the distance of the at least one terminal relative to the vehicle-mounted device based on an angle of arrival and/or an angle of departure of the wireless signal.

In a possible design, determining a distance of the at least one terminal relative to the vehicle-mounted device based on the wireless signal includes: determining the distance of the at least one terminal relative to the vehicle-mounted device based on signal strength and an angle of arrival and/or an angle of departure of the wireless signal.

In a possible design, the determining, based on the position information of the at least one terminal relative to the vehicle-mounted device, whether the terminal is in a driver position area includes: if an angle of the terminal relative to the vehicle-mounted device matches an angle of a driver position relative to the vehicle-mounted device, and a distance of the terminal relative to the vehicle-mounted device is less than or equal to a preset distance, determining that the terminal is in the driver position area.

In a possible design, determining the driver terminal in the at least one terminal based on the position information of the at least one terminal relative to the vehicle-mounted device includes: if a distance of the terminal relative to the vehicle-mounted device is less than or equal to a preset distance, and an angle of the terminal relative to the vehicle-mounted device becomes larger from a historical moment to a current moment, determining the terminal as the driver terminal, where the angle of the terminal relative to the vehicle-mounted device includes an angle between a direction from the vehicle-mounted device to the terminal and a first reference direction, the first reference direction is parallel to a vehicle body plane and is from the vehicle-mounted device to a left side of the vehicle, and a time interval from the historical moment to the current moment is less than or equal to a preset time.

In a possible design, determining the driver terminal in the at least one terminal based on the position information of the at least one terminal relative to the vehicle-mounted device includes: if an angle of the terminal relative to the vehicle-mounted device becomes larger when the terminal is in a driver position area, determining the terminal as the driver terminal, where the angle of the terminal relative to the vehicle-mounted device includes an angle between a direction from the vehicle-mounted device to the terminal and a first reference direction, and the first reference direction is parallel to a vehicle body plane and is from the vehicle-mounted device to a left side of the vehicle.

In a possible design, the at least one terminal includes a first terminal and a second terminal. An angle of the first terminal relative to the vehicle-mounted device includes a first angle between a first direction from the vehicle-mounted device to the first terminal and a first reference direction. The first reference direction is parallel to a vehicle body plane and is from the vehicle-mounted device to a left side of the vehicle. An angle of the second terminal relative to the vehicle-mounted device includes a second angle between a second direction from the vehicle-mounted device to the second terminal and the first reference direction.

In a possible design, determining the driver terminal in the at least one terminal based on the position information of the at least one terminal relative to the vehicle-mounted device includes: if a distance of the first terminal relative to the vehicle-mounted device is less than or equal to a preset distance, a distance of the second terminal relative to the vehicle-mounted device is greater than the preset distance, and the first angle is within a first preset angle range, determining the first terminal as the driver terminal.

In a possible design, determining the driver terminal in the at least one terminal based on the position information of the at least one terminal relative to the vehicle-mounted device includes: if a distance between the first terminal and the vehicle-mounted device and a distance between the second terminal and the vehicle-mounted device are both less than or equal to a preset distance, the first angle is less than the second angle, and a first included angle between the first direction and the second direction is greater than a preset angle threshold, determining the first terminal as the driver terminal.

In a possible design, the at least one terminal further includes a third terminal, and an angle of the third terminal relative to the vehicle-mounted device includes a third angle between a third direction from the vehicle-mounted device to the third terminal and the first reference direction.

In a possible design, determining the driver terminal in the at least one terminal based on the position information of the at least one terminal relative to the vehicle-mounted device includes: if a distance of the first terminal relative to the vehicle-mounted device, a distance of the second terminal relative to the vehicle-mounted device, and a distance of the third terminal relative to the vehicle-mounted device are all less than or equal to a preset distance, the first angle is less than the second angle, the third angle is less than the second angle, a first included angle between the first direction and the second direction is greater than a preset angle threshold, and a second included angle between the third direction and the second direction is greater than the preset angle threshold, determining a terminal that is most recently connected to the vehicle-mounted device in the first terminal and the third terminal as the driver terminal.

In a possible design, determining the driver terminal in the at least one terminal based on the position information of the at least one terminal relative to the vehicle-mounted device includes: if a distance of the first terminal relative to the vehicle-mounted device and a distance of the second terminal relative to the vehicle-mounted device are both less than or equal to a preset distance, and a first included angle between the first direction and the second direction is less than or equal to a preset angle threshold, obtaining a first angle at a historical moment and a second angle at the historical moment; and if the first angle becomes larger and the second angle become smaller from the historical moment to a current moment, determining the first terminal as the driver terminal.

In a possible design, determining the driver terminal in the at least one terminal based on the position information of the at least one terminal relative to the vehicle-mounted device includes: if a distance of the first terminal relative to the vehicle-mounted device, a distance of the second terminal relative to the vehicle-mounted device, and a distance of the third terminal relative to the vehicle-mounted device are all less than or equal to a preset distance, a first included angle between the first direction and the second direction is less than or equal to a preset angle threshold, a second included angle between the third direction and the second direction is less than or equal to the preset angle threshold, obtaining a first angle at a historical moment, a second angle at the historical moment, and a third angle at the historical moment; and if the first angle and the third angle become larger and the second angle becomes smaller from the historical moment to a current moment, determining a terminal that is most recently connected to the vehicle-mounted device in the first terminal and the third terminal as the driver terminal.

In a possible design, determining the driver terminal in the at least one terminal based on the position information of the at least one terminal relative to the vehicle-mounted device includes: if a distance of the first terminal relative to the vehicle-mounted device and a distance of the second terminal relative to the vehicle-mounted device are both less than or equal to a preset distance, and the first angle and the second angle are both within a first preset angle range or a second preset angle range, determining a terminal that is most recently connected to the vehicle-mounted device in the first terminal and the second terminal as the driver terminal.

In a possible design, determining the driver terminal in the at least one terminal based on the position information of the at least one terminal relative to the vehicle-mounted device includes: if a distance of the first terminal relative to the vehicle-mounted device, a distance of the second terminal relative to the vehicle-mounted device, and a distance of the third terminal relative to the vehicle-mounted device are all less than or equal to a preset distance, and the first angle, the second angle, and the third angle are all within a first preset angle range or a second preset angle range, determining a terminal that is most recently connected to the vehicle-mounted device in the first terminal, the second terminal, and the third terminal as the driver terminal. A driver terminal determining method is introduced for each of a plurality of cases that may exist in determining a quantity of terminals for which positioning can be implemented in the vehicle and a position distribution of the terminals for which positioning can be implemented in the vehicle, thereby improving accuracy and flexibility of driver terminal determining.

In a possible design, the angle of the terminal relative to the vehicle-mounted device includes an angle between a direction from the vehicle-mounted device to the terminal and a second reference direction, and the second reference direction is parallel to a vehicle body plane and is from the front of the vehicle to the rear of the vehicle. According to the solution provided in this embodiment, flexibility of determining the angle of the terminal relative to the vehicle-mounted device is improved.

According to a second aspect not claimed, this application provides a communications apparatus, including a module, a component, or a circuit configured to implement the communication connection method in the first aspect.

According to a third aspect according to the invention, the invention provides a communications apparatus, including:

a memory and a processor, where the memory is coupled to the processor.

The processor is configured to perform the method according to the first aspect.

In a possible design, the communications apparatus in the second aspect or the third aspect may be a vehicle-mounted device, or may be a component (for example, a chip or a circuit) of a vehicle-mounted device.

In another possible design, the communications apparatus in the third aspect may further include a memory. The memory is configured to store a computer program, and the processor is configured to execute the computer program stored in the memory, so that the communications apparatus is enabled to perform the method according to the first aspect.

According to a fourth aspect not claimed, this application provides a communications apparatus, including an input interface circuit, a logic circuit, and an output interface circuit. The logic circuit is configured to perform the method according to the first aspect.

According to a fifth aspect according to the invention, the invention provides a computer-readable storage medium. The computer-readable storage medium stores a computer program, and when the computer program runs on a computer, the computer is enabled to perform the method according to the first aspect.

According to a sixth aspect not claimed, this application provides a computer program. When the computer program is executed by a computer, the computer program is used to perform the method according to the first aspect.

In a possible design, all or some of programs in the sixth aspect may be stored in a storage medium encapsulated with a processor, or some or all of programs may be stored in a memory that is not encapsulated with a processor.

According to a seventh aspect not claimed, an embodiment of this application further provides a communications system, including the communications apparatus according to the second aspect, the third aspect, or the fourth aspect.

According to an eighth aspect not claimed, an embodiment of this application further provides a processor. The processor includes at least one circuit, configured to perform the method according to the first aspect.

It can be learned that in the foregoing aspects, a wireless signal sent by at least one terminal in a vehicle is detected, and position information of the at least one terminal relative to a vehicle-mounted device is determined based on the wireless signal sent by the at least one terminal. In addition, a driver terminal in the at least one terminal is determined based on the position information of the at least one terminal relative to the vehicle-mounted device, and a communication connection is established to the driver terminal. Compared with the conventional technology in which the vehicle-mounted device is preferentially automatically connected to a terminal that is most recently connected to the vehicle-mounted device, this method can avoid a problem that the vehicle-mounted device is still connected to the terminal that is most recently connected to the vehicle-mounted device when the terminal is not a current driver terminal. In other words, the vehicle-mounted device is connected only to the driver terminal each time. To be specific, the vehicle-mounted device is connected only to a terminal that most needs to be connected to the vehicle-mounted device each time. This reduces a connection operation of a driver, and improves convenience of connecting the driver terminal to the vehicle-mounted device.

## BRIEF DESCRIPTION OF DRAWINGS

FIG. 1 is a schematic diagram of an application scenario according to an embodiment of this application;
FIG. 2 is a schematic diagram of another application scenario according to an embodiment of this application;
FIG. 3 is a flowchart of a communication connection method according to an embodiment of this application;
FIG. 4 is a signaling diagram of a communication connection method according to an embodiment of this application;
FIG. 5 is a schematic diagram of an AOA according to an embodiment of this application;
FIG. 6 is a signaling diagram of another communication connection method according to an embodiment of this application;
FIG. 7 is a schematic diagram of another AOA according to an embodiment of this application;
FIG. 8 is a schematic diagram of a three-dimensional coordinate system according to an embodiment of this application;
FIG. 9 is a schematic diagram of a two-dimensional coordinate system according to an embodiment of this application;
FIG. 10 is a schematic diagram of another application scenario according to an embodiment of this application;
FIG. 11 is a schematic diagram of another application scenario according to an embodiment of this application;
FIG. 12 is a schematic diagram of another application scenario according to an embodiment of this application;
FIG. 13 is a schematic diagram of another application scenario according to an embodiment of this application;
FIG. 14 is a schematic diagram of another application scenario according to an embodiment of this application;
FIG. 15 is a schematic diagram of a structure of a communications apparatus;
FIG. 16 is a schematic diagram of a structure of a communications apparatus according to an embodiment of this application;
FIG. 17 is a schematic diagram of a structure of another communications apparatus according to an embodiment of this application; and
FIG. 18 is a schematic diagram of a structure of another communications apparatus according to an embodiment of this application.

In the following description, features which in the above summary of the invention have been marked as "not claimed" are also hereinafter, when they are described and explained with reference to the drawings, to be understood as "not claimed" or "not part of the invention".

## DESCRIPTION OF EMBODIMENTS

Terms used in embodiments of this application are merely used to explain specific embodiments of this application, but are not intended to limit this application.

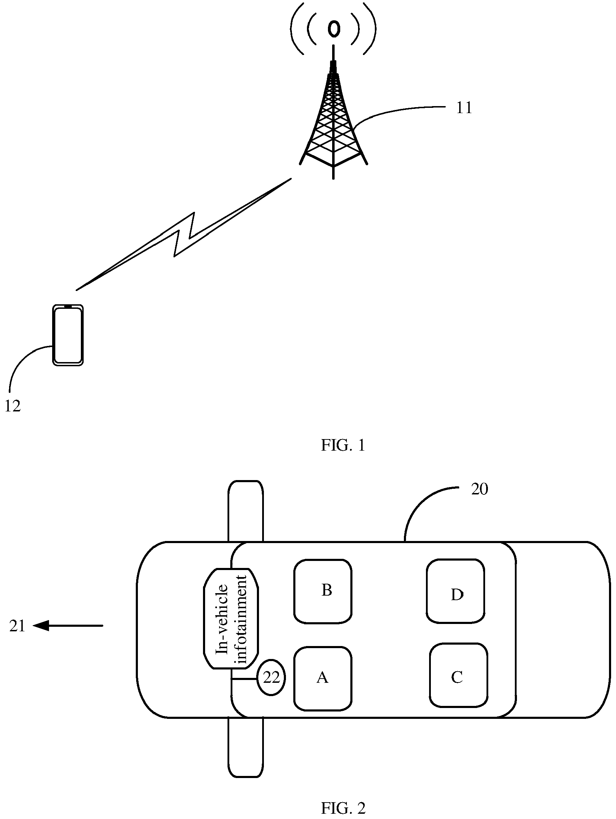

Embodiments of this application may be applied to various communications systems. FIG. 1 is a schematic diagram of an application scenario according to an embodiment of this application. A communications system shown in FIG. 1 mainly includes a network device 11 and a terminal 12.

(1) The network device 11 may be a network side device, for example, an access point (Access Point, AP) of a wireless local area network (Wireless Local Area Network, WLAN), an evolved NodeB (Evolved Node B, eNB or eNodeB) of 4G, or a base station for next generation communication, for example, a 5G new radio access technology (New Radio Access Technology, NR) base station (next generation Node B, gNB), a small cell, or a micro cell, or may be a relay station, a transmission and reception point (Transmission and Reception Point, TRP), a road side unit (Road Side Unit, RSU), or the like. In this embodiment, communications systems of different communications standards have different base stations. For distinction, a base station in a 4G communications system is referred to as a long term evolution (Long Term Evolution, LTE) eNB, and a base station in a 5G communications system is referred to as an NR gNB. A base station that supports both the 4G communications system and the 5G communications system is referred to as an evolved long term evolution (Evolved Long Term Evolution, eLTE) eNB. These names are only for ease of distinction, but are not limited in meaning.

(2) The terminal 12 is also referred to as user equipment (User Equipment, UE), and is a device that provides voice and/or data connectivity for a user, for example, a handheld device having a wireless connection function, a vehicle-mounted device, or a vehicle with a vehicle-to-vehicle (vehicle to vehicle, V2V) communication capability. Common terminals include, for example, a mobile phone, a tablet computer, a notebook computer, a palmtop computer, a mobile Internet device (mobile Internet device, MID), and wearable devices such as a smartwatch, a smart band, and a pedometer.

(3) "A plurality of" indicates two or more, and another quantifier is similar to "a plurality of". "And/or" describes an association between associated objects and represents that three relationships may exist. For example, A and/or B may represent the following three cases: Only A exists, both A and B exist, and only B exists. The character "/" generally indicates an "or" relationship between the associated objects.

It should be noted that, a quantity and a type of terminals 12 included in the communications system shown in FIG. 1 are merely an example, and this embodiment of this application is not limited thereto. For example, more terminals 12 that communicate with the network device 11 may further be included. For brevity, details are not described in the accompanying drawings. In addition, in the communications system shown in FIG. 1, although the network device 11 and the terminal 12 are shown, the communications system may include but is not limited to the network device 11 and the terminal 12, for example, may further include a core network device node or a device configured to carry a virtualized network function. These are clear to a person of ordinary skill in the art. Details are not described herein.

In addition, embodiments of this application are not only applicable to communications systems such as a 4G wireless communications system, a vehicle to everything (vehicle to everything, V2X) communications system, a device-to-device (Device-to-Device, D2D) communications system, and subsequent evolution of LTE, but also applicable to a next-generation wireless communications system, namely, a 5G communications system, and other systems that may appear in the future such as a next-generation Wi-Fi network and the 5G Internet of vehicles.

It should be noted that, with continuous evolution of the communications system, names of the foregoing network elements may change in another system that may appear in the future. In this case, the solutions provided in embodiments of this application are also applicable.

FIG. 2 is a schematic diagram of another application scenario according to an embodiment of this application. As shown in FIG. 2, A, B, C, and D each represent a terminal in a vehicle 20. A direction indicated by an arrow 21 represents a head direction of the vehicle 20, and 22 represents a steering wheel of the vehicle 20. A quantity of seats in the vehicle 20 and a quantity of terminals in the vehicle 20 are not limited in this embodiment. The quantity of seats in the vehicle 20 and the quantity of terminals in the vehicle 20 may be the same or different. The quantity of seats in the vehicle 20 and a quantity of users in the vehicle 20 may be the same or different. In addition, a quantity of terminals that can be carried by each user is not limited in this embodiment. In addition, generally, a vehicle-mounted device is installed in the vehicle, and the vehicle-mounted device may be, for example, in-vehicle infotainment shown in FIG. 2. The in-vehicle infotainment is usually installed in a center console. The in-vehicle infotainment may include a host and a screen. In some scenarios, the host and the screen of the in-vehicle infotainment are together, but in some other scenarios, the host and the screen of the in-vehicle infotainment are separated. The center console refers to a workbench in front of a driver and a front passenger in a cab. The workbench is a carrier of apparatuses such as an instrument panel, an air conditioner, a sound panel, a storage box, and an airbag. The in-vehicle infotainment may be communicatively connected to the terminal in the vehicle in a wired or wireless manner, and provide a service for the terminal, for example, a music playing service or a navigation service. For example, the terminal A, the terminal B, the terminal C, and the terminal D are all connected to the in-vehicle infotainment at historical time. Currently, the in-vehicle infotainment determines that the terminal A, the terminal B, the terminal C, and the terminal D exist in the vehicle 20, and further selects a terminal that is most recently connected to the in-vehicle infotainment in the terminal A, the terminal B, the terminal C, and the terminal D as a terminal that needs to be connected currently. For example, if the terminal D is the terminal that is most recently connected to the in-vehicle infotainment, the in-vehicle infotainment determines that the terminal D is the terminal that needs to be connected currently, and establishes a connection to the terminal D. In other words, a user of the terminal D may not be the driver this time. However, because the in-vehicle infotainment automatically selects the terminal that is most recently connected to the in-vehicle infotainment automatically for connection, a user who has a real connection requirement, for example, a user of the terminal A, who is the driver this time, can only select to manually connect the terminal A to the in-vehicle infotainment. This causes a lot of trouble for the driver. To resolve this problem, embodiments provide a communication connection method. The following describes the communication connection method in detail with reference to the embodiments.

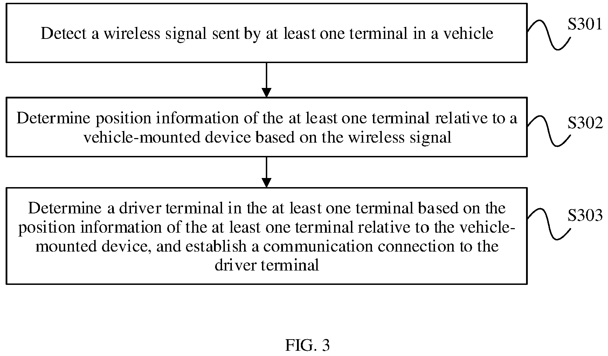

FIG. 3 is a flowchart of a communication connection method according to an embodiment of this application. The method is applicable to a vehicle-mounted device, for example, the in-vehicle infotainment shown in FIG. 2. As shown in FIG. 3, the communication connection method in this embodiment includes the following steps.

S301: Detect a wireless signal sent by at least one terminal in a vehicle.

In this embodiment, the in-vehicle infotainment is connected to the at least one terminal in the vehicle in a wireless manner. The wireless manner is not limited herein. For example, the wireless manner may be Bluetooth, Wireless Fidelity (Wireless Fidelity, Wi-Fi), a 4G network, or a 5G network. Herein, Bluetooth is used as an example for description. A Bluetooth module may be installed on the at least one terminal in the vehicle. At least one antenna may be disposed on the Bluetooth module, and supports a communications protocol that can be used to perform angle positioning and distance positioning on the terminal, for example, the Bluetooth 5.1 communications protocol. It should be noted that, when there is a plurality of terminals in the vehicle, it is not required that all of the plurality of terminals be installed with the Bluetooth module supporting the Bluetooth 5.1 communications protocol. In other words, some of the plurality of terminals may be installed with the Bluetooth module supporting the Bluetooth 5.1 communications protocol, and some of the terminals may not be installed with the Bluetooth module supporting the Bluetooth 5.1 communications protocol. Specifically, the terminal installed with the Bluetooth module may broadcast a wireless signal in real time, so that the in-vehicle infotainment can detect the wireless signal broadcast by the at least one terminal in the vehicle.

S302: Determine position information of the at least one terminal relative to the vehicle-mounted device based on the wireless signal.

The position information includes an angle and a distance. The in-vehicle infotainment may determine an angle and a distance of the terminal relative to the in-vehicle infotainment based on the wireless signal broadcast by each terminal. Specifically, the in-vehicle infotainment may detect the angle of the terminal relative to the in-vehicle infotainment by using an angle of arrival (Angle of Arrival, AOA) or angle of departure (angle of departure, AOD) technology of the Bluetooth 5.1 version. The in-vehicle infotainment may detect the distance of the terminal relative to the in-vehicle infotainment by using signal strength of the wireless signal broadcast by the terminal, or detect the distance of the terminal relative to the in-vehicle infotainment by using the AOA or AOD technology of the Bluetooth 5.1 version, or detect the distance of the terminal relative to the in-vehicle infotainment by using signal strength of the wireless signal broadcast by the terminal and the AOA or AOD technology.

It may be understood that the angle and the distance of the terminal relative to the vehicle-mounted device are an example of positioning information, namely, the position information, of the terminal. The position information of the terminal may alternatively be other information. Details are not described herein again. In addition, detecting the position information, such as the angle and the distance, of the terminal relative to the vehicle-mounted device by using the AOA or AOD technology is merely a manner of positioning the terminal, and another positioning method may alternatively be used to position the terminal.

S303: Determine a driver terminal in the at least one terminal based on the position information of the at least one terminal relative to the vehicle-mounted device, and establish a communication connection to the driver terminal.

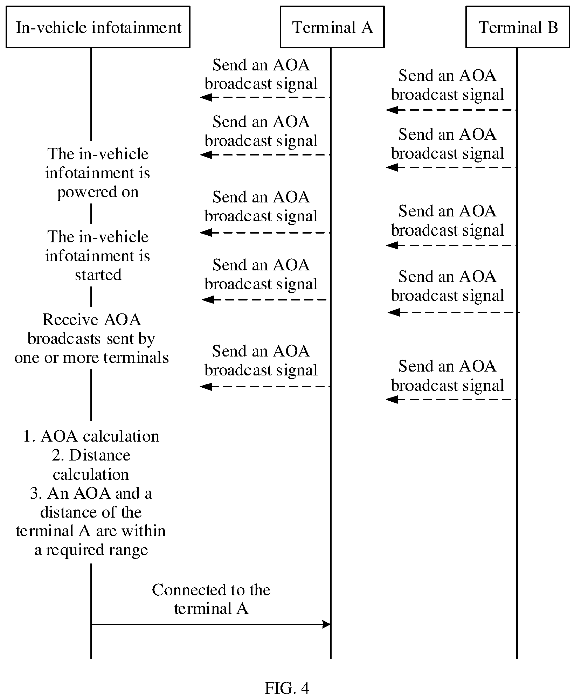

As shown in FIG. 4, a terminal A and a terminal B are terminals in the vehicle. The terminal A and the terminal B send AOA broadcast signals in real time. After the in-vehicle infotainment is powered on and started, the in-vehicle infotainment may receive AOA broadcast signals sent by one or more terminals. An AOA and a distance of the terminal A relative to the in-vehicle infotainment are calculated based on the AOA broadcast signal sent by the terminal A, and an AOA and a distance of the terminal B relative to the in-vehicle infotainment are calculated based on the AOA broadcast signal sent by the terminal B. Further, it is determined, based on the AOA and the distance of the terminal A relative to the in-vehicle infotainment and the AOA and the distance of the terminal B relative to the in-vehicle infotainment, which terminal in the terminal A and the terminal B has an AOA and a distance relative to the in-vehicle infotainment within a required range. For example, if the AOA and the distance of the terminal A relative to the in-vehicle infotainment are within the required range, the in-vehicle infotainment determines the terminal A as the driver terminal, and establishes a communication connection to the terminal A.

In this embodiment, the wireless signal sent by the at least one terminal in the vehicle is detected, and the position information of the at least one terminal relative to the vehicle-mounted device is determined based on the wireless signal sent by the at least one terminal. In addition, the driver terminal in the at least one terminal is determined based on the position information of the at least one terminal relative to the vehicle-mounted device, and the communication connection is established to the driver terminal. Compared with the conventional technology in which the vehicle-mounted device is preferentially automatically connected to a terminal that is most recently connected to the vehicle-mounted device, this method can avoid a problem that the vehicle-mounted device is still connected to the terminal that is most recently connected to the vehicle-mounted device when the terminal is not a current driver terminal. In other words, the vehicle-mounted device is connected only to the driver terminal each time. To be specific, the vehicle-mounted device is connected only to a terminal that most needs to be connected to the vehicle-mounted device each time. This reduces a connection operation of a driver, and improves convenience of connecting the driver terminal to the vehicle-mounted device.

The foregoing embodiment mentions that the in-vehicle infotainment may detect the angle of the terminal relative to the in-vehicle infotainment by using the AOA or AOD technology. The following describes the detection process in detail. Specifically, when the angle of the terminal relative to the in-vehicle infotainment is detected by using the AOA or AOD technology, the in-vehicle infotainment and the terminal need to meet a hardware condition and a software condition shown in the following Table 1.

**Table 1**

|  |  | In-vehicle infotainment (detecting party) | Terminal (broadcasting party) |
|---|---|---|---|
| Angle measurement | AOA | Two or more antennas, Bluetooth 5.1 | Single antenna, Bluetooth 5.1 |
|  | AOD | Single antenna, Bluetooth 5.1 | Two or more antennas, Bluetooth 5.1 |

It can be learned from Table 1 that, when the AOA technology is used to detect the angle of the terminal relative to the in-vehicle infotainment, the in-vehicle infotainment needs to have two or more antennas and support the Bluetooth 5.1 communications protocol, and the terminal needs to have a single antenna and support the Bluetooth 5.1 communications protocol. When the AOD technology is used to detect the angle of the terminal relative to the in-vehicle infotainment, the in-vehicle infotainment needs to have a single antenna and support the Bluetooth 5.1 communications protocol, and the terminal needs to have two or more antennas and support the Bluetooth 5.1 communications protocol. The following uses the AOA as an example to describe a method for detecting the angle of the terminal relative to the in-vehicle infotainment.

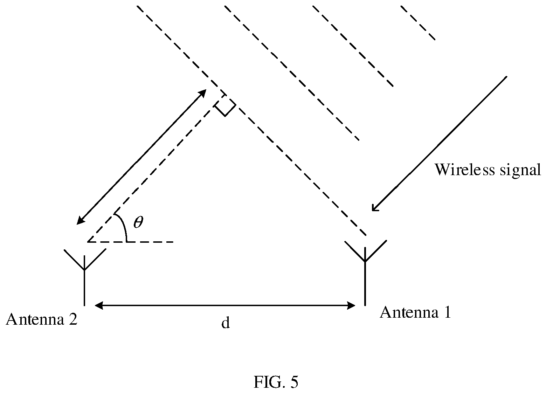

As shown in FIG. 5, an antenna 1 and an antenna 2 represent antennas in the in-vehicle infotainment, a wireless signal is a signal sent by the terminal, d represents a distance between the antenna 1 and the antenna 2, and L represents an optical path difference. Because distances of the terminal relative to the antenna 1 and the antenna 2 are different, phases of wireless signals sent by the terminal are different when the wireless signals separately arrive at the antenna 1 and the antenna 2. Herein, the angle of the terminal relative to the in-vehicle infotainment may be calculated based on a phase difference between the wireless signals arriving at the antenna 1 and the antenna 2. The angle may be specifically an angle of arrival $\theta$ shown in FIG. 5, $\cos\theta = \frac{L}{d}$, that is, $\theta = arccos\frac{L}{d}$. In addition, the phase difference between the wireless signals arriving at the antenna 1 and the antenna 2 is denoted as $\varphi$, and a relationship between the phase difference $\varphi$, the optical path difference L, and a wavelength $\lambda$ of the wireless signal is shown in the following formula (1):

$$\frac{\varphi}{L} = \frac{2\pi}{\lambda} \qquad (1)$$

The optical path difference L may be calculated according to the formula (1), that is $L = \frac{\varphi\lambda}{2\pi}$. Further, $L = \frac{\varphi\lambda}{2\pi}$ is substituted into $\theta = arccos\frac{L}{d}$, to obtain $\theta = arccos\frac{\varphi\lambda}{2\pi d}$. The angle of arrival $\theta$ is the angle of the terminal relative to the in-vehicle infotainment. Similarly, when there is a plurality of terminals in the vehicle, an angle of another terminal relative to the in-vehicle infotainment may be calculated. Details are not described herein again.

It may be understood that, in another embodiment, the in-vehicle infotainment may alternatively include more than two antennas, for example, three or more antennas. In this case, according to the method shown in FIG. 5, an angle of the terminal relative to the in-vehicle infotainment may be calculated based on every two antennas. In this way, a plurality of angles of the terminal relative to the in-vehicle infotainment may be calculated, and a relatively accurate angle of the terminal relative to the in-vehicle infotainment may be calculated based on the plurality of angles of the terminal relative to the in-vehicle infotainment. In addition, the antennas may be integrated in the in-vehicle infotainment, or may not be integrated in the in-vehicle infotainment, but may be distributed in other positions in the vehicle, for example, a roof of the vehicle. When the antennas are not integrated in the in-vehicle infotainment, the in-vehicle infotainment and the antennas only need to be communicatively connected. To be specific, after receiving the wireless signal sent by the terminal, the antenna sends the wireless signal to the in-vehicle infotainment through a communication link between the antenna and the in-vehicle infotainment. In some embodiments, alternatively, some antennas may be integrated in the in-vehicle infotainment, and some antennas may be distributed in other positions in the vehicle.

Based on the foregoing embodiments, the following several feasible implementations may be specifically used to calculate the distance of the terminal relative to the in-vehicle infotainment.

In a feasible implementation, the distance of the terminal relative to the in-vehicle infotainment is detected by using signal strength of the wireless signal broadcast by the terminal.

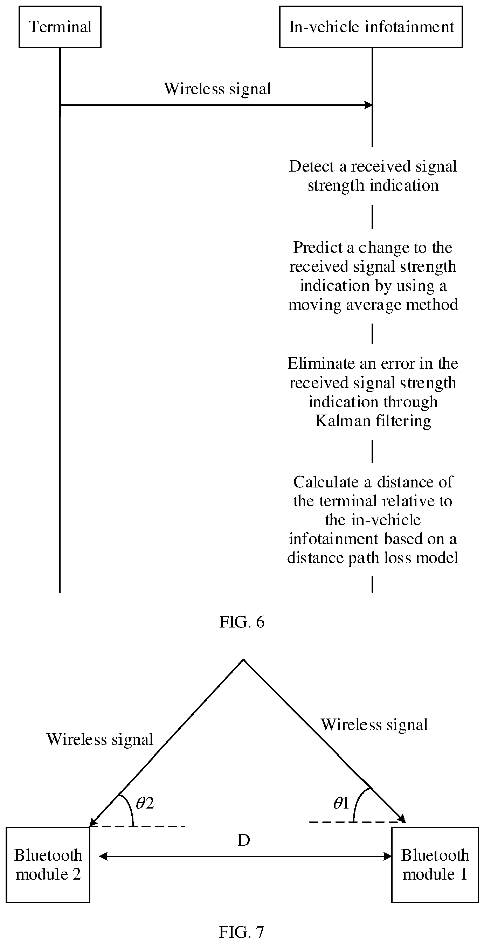

As shown in FIG. 6, the in-vehicle infotainment receives the wireless signal sent by the terminal, and detects a received signal strength indication (Received Signal Strength Indication, RSSI). Further, the in-vehicle infotainment processes the RSSI by using a moving average (moving average) method, and predicts a change trend of the RSSI. Specifically, according to a heavy-near light-far principle, a larger weight is assigned to an RSSI detected at a current moment, and a smaller weight is assigned to an RSSI detected at a historical moment, to optimize an effect of recent data and weaken an effect of long-term data. Further, an error in the RSSI is eliminated through Kalman filtering (Kalman Filtering). In addition, the wireless signal sent by the terminal may include identification information of a distance path loss model. The in-vehicle infotainment may calculate the distance of the terminal relative to the in-vehicle infotainment based on the distance path loss model corresponding to the identification information and an RSSI that is obtained after the error is eliminated. A moving average module configured to perform the moving average method and a Kalman filter configured to perform Kalman filtering may be integrated in the in-vehicle infotainment, or may be integrated in a remote server. When the moving average module and the Kalman filter are integrated in the remote server, the in-vehicle infotainment needs to send the RSSI detected by the in-vehicle infotainment to the remote server. The remote server calculates the distance of the terminal relative to the in-vehicle infotainment based on the RSSI, and sends the distance to the in-vehicle infotainment.

In another feasible implementation, a position of the terminal relative to the in-vehicle infotainment is detected by using the AOA or AOD technology, and the position includes a distance and a direction.

As shown in FIG. 7, a Bluetooth module 1 and a Bluetooth module 2 are deployed on the in-vehicle infotainment. Each Bluetooth module includes at least two antennas. Each Bluetooth module and the terminal need to meet the hardware condition and the software condition shown in Table 1. Details are not described herein again. D represents a distance between the Bluetooth module 1 and the Bluetooth module 2. The AOA is used as an example. Angles of arrival of wireless signals of the terminal that separately arrive at the Bluetooth module 1 and the Bluetooth module 2 may be calculated according to the method shown in FIG. 5. Herein, the angle of arrival of the wireless signal arriving at the Bluetooth module 1 is denoted as $\theta 1$, and the angle of arrival of the wireless signal arriving at the Bluetooth module 2 is denoted as $\theta 2$. As shown in FIG. 7, $\theta 1$ and $\theta 2$ are two corners of a triangle, and D is one side of the triangle. With two corners and one side of the triangle known, the position of the terminal relative to the in-vehicle infotainment can be determined. The position may include a distance and a direction.

In another feasible implementation, the distance of the terminal relative to the in-vehicle infotainment is detected by using signal strength of the wireless signal broadcast by the terminal and the AOA or AOD technology. For example, the distance of the terminal relative to the in-vehicle infotainment may be calculated based on the signal strength of the wireless signal broadcast by the terminal, and the distance of the terminal relative to the in-vehicle infotainment may also be calculated based on the AOA or AOD technology. Further, calculation results obtained by using the two methods are comprehensively calculated, to obtain a high-precision position of the terminal relative to the in-vehicle infotainment, where the position includes a distance and a direction.

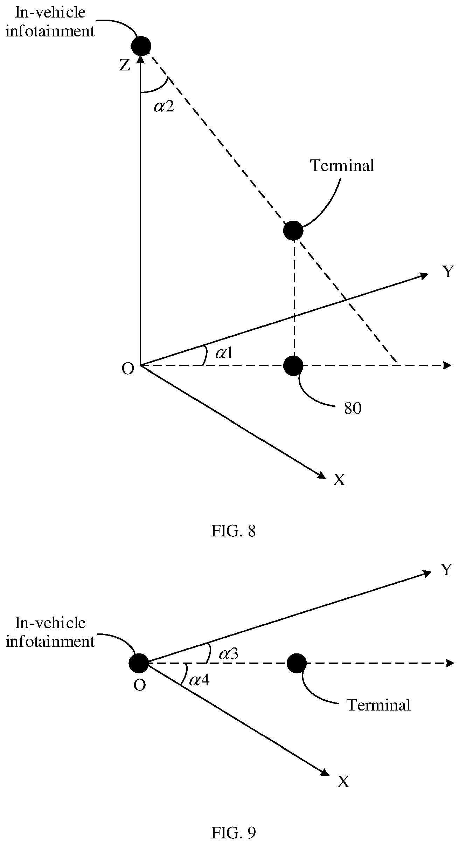

In some application scenarios, a height of the in-vehicle infotainment relative to a vehicle chassis or the ground is relatively large, and a three-dimensional coordinate system shown in FIG. 8 may be established. As shown in FIG. 8, an XOY plane may be a plane on which the vehicle chassis is located or the ground. Herein, the plane on which the vehicle chassis is located is used as an example for schematic description. A coordinate origin O may be a projection point of the in-vehicle infotainment on the vehicle chassis, and a projection point of the terminal on the vehicle chassis is a point 80. An included angle between a straight line passing through the coordinate origin O and the point 80 and a positive direction of an Y axis is denoted as $\alpha 1$. An included angle between a straight line passing through the in-vehicle infotainment and the terminal and a positive direction of a Z axis is denoted as $\alpha 2$. A positive direction of an X axis may be parallel to a vehicle body plane and may be from the coordinate origin O to a left side of the vehicle, that is, from a right side of the vehicle to the left side of the vehicle. The positive direction of the Y axis may be parallel to the vehicle body plane and may be from the front of the vehicle to the rear of the vehicle. Herein, the positive direction of the X axis is denoted as a first reference direction, and the positive direction of the Y axis is denoted as a second reference direction.

The positive direction of the Z axis is perpendicular to the X axis and the Y axis and is upward. $\alpha1$ may be denoted as an azimuth angle (Azimuth angle), and $\alpha2$ may be denoted as an elevation angle (Elevation angle). The azimuth angle and the elevation angle may be specifically the foregoing angles of the terminal relative to the in-vehicle infotainment, and a distance between the in-vehicle infotainment and the terminal is used as the distance of the terminal relative to the in-vehicle infotainment. In other words, in the three-dimensional coordinate system shown in FIG. 8, the driver terminal is determined based on the angle and the distance of the terminal relative to the in-vehicle infotainment.

In some other application scenarios, the driver terminal may alternatively be determined in a two-dimensional coordinate system. For example, based on FIG. 8, the projection point obtained by projecting the in-vehicle infotainment on the XOY plane is the origin O, the projection point obtained by projecting the terminal on the XOY plane is the point 80, $\alpha1$ shown in FIG. 8 is used as the angle of the terminal relative to the in-vehicle infotainment, and a distance from the point 80 to the origin O is used as the distance of the terminal relative to the in-vehicle infotainment. In other words, the three-dimensional coordinate system is projected to a two-dimensional coordinate system, and the driver terminal is determined in the two-dimensional coordinate system based on the angle and the distance of the terminal relative to the in-vehicle infotainment.

In some other application scenarios, heights of the in-vehicle infotainment and the terminal relative to the vehicle chassis or the ground may not be considered. It may be assumed that the in-vehicle infotainment and the terminal are at a same height, or a height difference between the in-vehicle infotainment and the terminal is less than a preset height difference. In this case, a two-dimensional coordinate system XOY shown in FIG. 9 is established by using the in-vehicle infotainment as a coordinate origin O, a direction from the coordinate origin O to a left side of the vehicle as a positive direction of an X axis, and a direction from the front of the vehicle to the rear of the vehicle as a positive direction of an Y axis. An included angle between a straight line passing through the in-vehicle infotainment and the terminal and the positive direction of the Y axis is denoted as $\alpha3$, and $\alpha3$ is used as the angle of the terminal relative to the in-vehicle infotainment. The distance of the terminal relative to the in-vehicle infotainment is a distance from the coordinate origin O to the terminal. In the two-dimensional coordinate system XOY, the driver terminal is determined based on the angle and the distance of the terminal relative to the in-vehicle infotainment.

In the following embodiment, the two-dimensional coordinate system XOY shown in FIG. 9 is used as an example to describe a specific process of determining the driver terminal based on the angle and the distance of the terminal relative to the in-vehicle infotainment. In addition, it should be noted that, in the two-dimensional coordinate system XOY shown in FIG. 9, an included angle $\alpha4$ between the straight line passing through the in-vehicle infotainment and the terminal and the positive direction of the X axis may also be used as the angle of the terminal relative to the in-vehicle infotainment. In addition, the coordinate origin O of the two-dimensional coordinate system XOY shown in FIG. 9 may alternatively be a position of an antenna in the in-vehicle infotainment, or a midpoint of two antennas in the in-vehicle infotainment, or a geometric center of a plane formed by a plurality of antennas in the in-vehicle infotainment. In this case, the antenna refers to an antenna integrated in the in-vehicle infotainment.

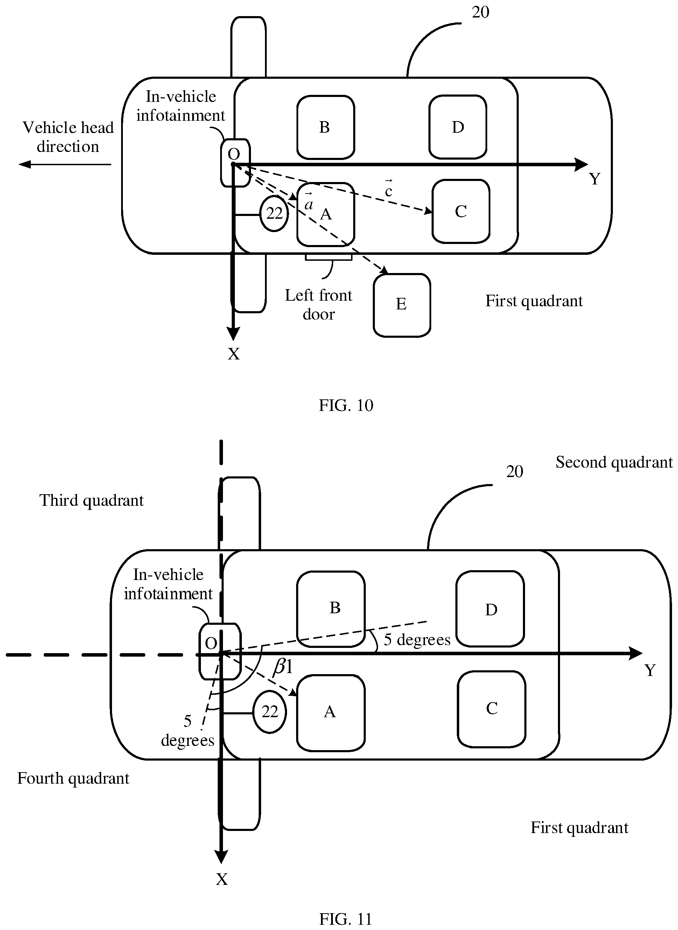

In addition, in some application scenarios, there may be a plurality of terminals in the vehicle. However, software and hardware of some terminals meet the requirements shown in Table 1, and some terminals may not meet the requirements shown in Table 1. In other words, for a terminal that meets the requirements shown in Table 1, positioning such as angle positioning and distance positioning of the terminal may be implemented. For a terminal that does not meet the requirements shown in Table 1, the terminal cannot be positioned. For example, a terminal A, a terminal B, a terminal C, a terminal D, and a terminal E shown in FIG. 10 all meet the requirements shown in Table 1. In this case, a terminal in a front-row seat and a terminal in a rear-row seat may be determined based on distances of the terminals relative to the in-vehicle infotainment. For example, distances of the terminal A and the terminal B relative to the in-vehicle infotainment are less than distances of the terminal C and the terminal D relative to the in-vehicle infotainment. Therefore, the terminal A and the terminal B are terminals in front-row seats, and the terminal C and the terminal D are terminals in rear-row seats. In addition, a terminal inside the vehicle and a terminal outside the vehicle may further be determined based on angles and distances of the terminals relative to the in-vehicle infotainment. For example, an angle of the terminal A relative to the in-vehicle infotainment is very close to an angle of the terminal E relative to the in-vehicle infotainment, but a distance of the terminal E relative to the in-vehicle infotainment is greater than the distance of the terminal A relative to the in-vehicle infotainment. Therefore, it is determined that the terminal A is a terminal inside the vehicle, and the terminal E is a terminal outside the vehicle.

For example, as shown in FIG. 10, angles and distances of the terminal A, the terminal B, the terminal C, and the terminal D relative to the in-vehicle infotainment may be determined based on wireless signals separately sent by the terminal A, the terminal B, the terminal C, and the terminal D in the vehicle. Further, a terminal in a driver position area may be determined based on the angles and the distances of the terminal A, the terminal B, the terminal C, and the terminal D relative to the in-vehicle infotainment. If a terminal is in the driver position area, the terminal is determined as the driver terminal. A method for determining whether a terminal is in the driver position area may be: An angle of the terminal relative to the in-vehicle infotainment is compared with an angle of a driver position relative to the in-vehicle infotainment. If the angle of the terminal relative to the in-vehicle infotainment matches the angle of the driver position relative to the in-vehicle infotainment, and a distance of the terminal relative to the in-vehicle infotainment is less than or equal to a preset distance, it is determined that the terminal is in the driver position area. As shown in FIG. 10, the angle of the driver position relative to the in-vehicle infotainment may be an angle range of a first quadrant between a positive direction of an X axis and a positive direction of a Y axis. An angle between a vector $\vec{a}$ from the in-vehicle infotainment to the terminal A and the positive direction of the X axis is within the angle range corresponding to the first quadrant. An angle between a vector $\vec{c}$ from the in-vehicle infotainment to the terminal C and the positive direction of the X axis is also within the angle range corresponding to the first quadrant. In other words, the angles of the terminal A and the terminal C relative to the in-vehicle infotainment match the angle of the driver position relative to the in-vehicle infotainment, but the distance of the terminal A relative to the in-vehicle infotainment is less than or equal to the preset distance. The preset distance may be specifically a distance from the in-vehicle infotainment to a driver seat backrest. If a distance of a driver seat relative to a steering wheel is adjustable, the preset distance is from the in-vehicle infotainment to the driver seat backrest when the driver seat is adjusted to a position furthest from the steering wheel. The distance of the terminal C relative to the in-vehicle infotainment is greater than the preset distance. In this case, it is determined that the terminal A is in the driver position area. Therefore, the terminal A is the driver terminal.

In another possible implementation, FIG. 10 is used as an example. When the driver terminal in the terminal A, the terminal B, the terminal C, and the terminal D is determined based on the respective angles and distances of the terminal A, the terminal B, the terminal C, and the terminal D relative to the in-vehicle infotainment, the driver terminal may alternatively be determined based on a distance of each terminal relative to the in-vehicle infotainment and a change to an angle of each terminal relative to the in-vehicle infotainment from a historical moment to a current moment. An angle of a terminal relative to the in-vehicle infotainment is between a direction from the in-vehicle infotainment to the terminal and the positive direction of the X axis. Specifically, if a distance of a terminal relative to the in-vehicle infotainment is less than or equal to the preset distance, and an angle between a direction from the in-vehicle infotainment to the terminal and the positive direction of the X axis becomes larger from the historical moment to the current moment, the terminal is determined as the driver terminal. Herein, the positive direction of the X axis is denoted as the first reference direction. As shown in FIG. 10, the distances of the terminal A and the terminal B in the terminal A, the terminal B, the terminal C, and the terminal D relative to the in-vehicle infotainment are less than or equal to the preset distance. Further, respective changes to the angles of the terminal A and the terminal B relative to the in-vehicle infotainment are determined. For example, the terminal A enters the vehicle from a left front door of the vehicle. It may be understood that in a process of entering the vehicle from the left front door, an angle between a direction from the in-vehicle infotainment to the terminal A and the positive direction of the X axis becomes larger. It is assumed that a time period in which the driver enters the vehicle from the left front door is less than or equal to a preset time period, a moment at which the terminal A is located on the left front door is denoted as the historical moment, and a moment at which the terminal A is in the vehicle, for example, a moment at which the terminal A is located at the driver position, is denoted as the current moment. In this case, in the time period from the historical moment to the current moment, the angle between the direction from the in-vehicle infotainment to the terminal A and the positive direction of the X axis becomes larger. Therefore, the terminal A is determined as the driver terminal.

For the claimed invention FIG. 10 is used as an example. It is considered that the terminal A is in the driver position area when the terminal A moves from the left front door to the driver position. In the driver position area, the angle between the direction from the in-vehicle infotainment to the terminal A and the positive direction of the X axis becomes larger. Therefore, the terminal A is determined as the driver terminal.

In addition, there may be a plurality of terminals in the vehicle. However, some terminals meet the requirements shown in Table 1, and some terminals do not meet the requirements shown in Table 1. In other words, the in-vehicle infotainment can implement positioning for some terminals in the vehicle, but cannot implement positioning for some other terminals in the vehicle. There may be a plurality of cases for a quantity of terminals on which positioning can be implemented and a position distribution of the terminals on which positioning can be implemented in the vehicle. The following describes driver terminal determining methods for the plurality of cases.

In a possible case, there is only one terminal in the vehicle. The terminal may be located in a front-row area or a rear-row area, and the front-row area includes a front-row seat area and a center console area. In this case, the in-vehicle infotainment may determine the only one terminal in the vehicle as the driver terminal, and establishes a communication connection to the terminal.

In another possible case, there are two or more terminals whose angles and distances can be positioned in the vehicle, but the terminals whose angles and distances can be positioned are all located in a rear-row area. In addition, there may be another terminal whose angle and distance cannot be positioned in the vehicle. In this case, a terminal that is most recently connected to the in-vehicle infotainment in the vehicle is used as the driver terminal.

In another possible case, there are two or more terminals whose angles and distances can be positioned in the vehicle, but there is only one terminal whose angle and distance can be positioned in a front-row area, and the remaining terminals whose angles and distances can be positioned are located in a rear-row area. In addition, there may be another terminal whose angle and distance cannot be positioned in the vehicle. For example, the terminal A and the terminal C shown in FIG. 10 are terminals whose angles and distances can be positioned in the vehicle. The vector from the in-vehicle infotainment to the terminal A is denoted as $\vec{a}$, and the vector from the in-vehicle infotainment to the terminal C is denoted as $\vec{c}$. Herein, the terminal A is denoted as a first terminal, and the terminal C is denoted as a second terminal. The direction from the in-vehicle infotainment to the terminal A is denoted as a first direction, and a direction from the in-vehicle infotainment to the terminal C is denoted as a second direction. The angle of the terminal A relative to the in-vehicle infotainment is denoted as a first angle, and the angle of the terminal C relative to the in-vehicle infotainment is denoted as a second angle. Specifically, the first direction is a direction of the vector $\vec{a}$, and the second direction is a direction of the vector $\vec{c}$. The first angle is specifically the angle between the vector $\vec{a}$ and the positive direction of the X axis, and the second angle is specifically the angle between the vector $\vec{c}$ and the positive direction of the X axis. The distance of the terminal A relative to the in-vehicle infotainment is a size of the vector $\vec{a}$, and the distance of the terminal C relative to the in-vehicle infotainment is a size of the vector $\vec{c}$. If the distance of the terminal A relative to the in-vehicle infotainment is less than or equal to the preset distance, the distance of the terminal C relative to the in-vehicle infotainment is greater than the preset distance, and the first angle of the terminal A relative to the in-vehicle infotainment is within a first preset angle range, the terminal A is determined as the driver terminal. The preset distance may be specifically the distance from the in-vehicle infotainment to the driver seat backrest. If the distance of the driver seat relative to the steering wheel is adjustable, the preset distance is the distance from the in-vehicle infotainment to the driver seat backrest when the driver seat is adjusted to the position furthest from the steering wheel. As shown in FIG. 11, the positive direction of the X axis and the positive direction of the Y axis form a first quadrant of a two-dimensional coordinate system XOY, and a second quadrant, a third quadrant, and a fourth quadrant are sequentially in a counterclockwise direction from the first quadrant. The first preset angle range may be specifically an angle range obtained after a 90-degree range corresponding to the first quadrant is extended by 5 degrees to the second quadrant and extended by 5 degrees to the fourth quadrant, namely, an angle range shown by β1. Alternatively, the first preset angle range may be the 90-degree range corresponding to the first quadrant. The first preset angle range is not specifically limited herein.

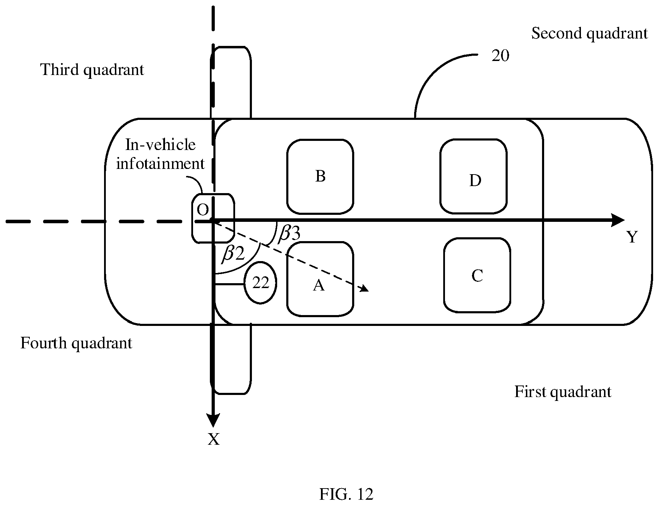

It may be understood that β1 shown in FIG. 11 is merely an example of the first preset angle range. In another embodiment, the first preset angle range may alternatively be another angle range. For example, β2 shown in FIG. 12 is another example of the first preset angle range. Specifically, $0 \leq \beta2 \leq 80$ degrees. In other words, when the distance of the terminal A relative to the in-vehicle infotainment is less than or equal to the preset distance, and an angle β3 between the direction from the in-vehicle infotainment to the terminal A and the positive direction of the Y axis is greater than or equal to 10 degrees, the terminal A is determined as the driver terminal.

In addition, in FIG. 10, FIG. 11, and FIG. 12, if the angle of the terminal A relative to the in-vehicle infotainment does not meet the first preset angle range, the terminal that is most recently connected to the in-vehicle infotainment in the vehicle is used as the driver terminal.

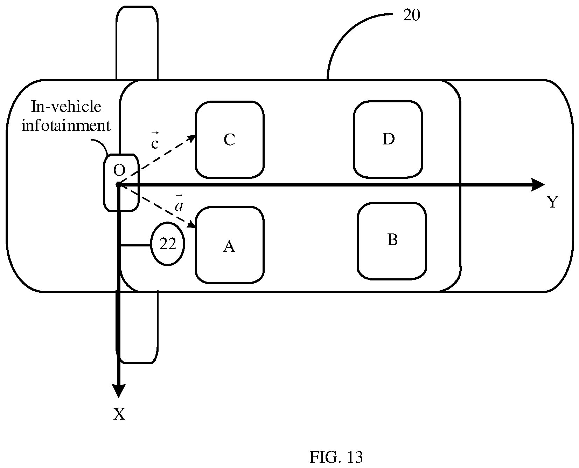

In another possible case, there are two or more terminals whose angles and distances can be positioned in the vehicle, and there are two terminals whose angles and distances can be positioned in a front-row area. In addition, there may be another terminal whose angle and distance cannot be positioned in the vehicle. As shown in FIG. 13, a terminal A, a terminal B, and a terminal C are terminals whose angles and distances can be positioned in the vehicle. Based on respective distances of the terminal A, the terminal B, and the terminal C relative to the in-vehicle infotainment, it may be determined that the terminal A and the terminal C are both in the front-row area, and the terminal B is in a rear-row area. In other words, the distances of the terminal A and the terminal C relative to the in-vehicle infotainment are both less than or equal to a preset distance. Herein, a direction from the in-vehicle infotainment to the terminal A is denoted as a first direction, namely, a direction of a vector $\vec{a}$, and a direction from the in-vehicle infotainment to the terminal C is denoted as a second direction, namely, a direction of a vector $\vec{c}$. An angle between the vector $\vec{a}$ and a positive direction of an X axis is denoted as a first angle, and an angle between the vector $\vec{c}$ and the positive direction of the X axis is denoted as a second angle. The following provides descriptions in determining a driver terminal in the terminal A and the terminal C based on an angle relationship between the first angle and the second angle.

An angle relationship between the first angle and the second angle is as follows: The first angle is less than the second angle, and a first included angle between the first direction and the second direction is greater than a preset angle threshold. In this case, the terminal A is determined as the driver terminal, and the terminal C is determined as a co-driver terminal. The preset angle threshold may be specifically 20 degrees. Specifically, the first angle between the vector $\vec{a}$ and the positive direction of the X axis is less than 100 degrees. For example, the driver terminal may be placed at a position between a driver seat and a co-driver seat. In this case, an angle between a direction from the in-vehicle infotainment to the driver terminal and the positive direction of the X axis may be equal to 90 degrees or slightly greater than 90 degrees. Within an error range, the angle between the direction from the in-vehicle infotainment to the driver terminal and the positive direction of the X axis when the driver terminal is located at a middle position between the driver seat and the co-driver seat may be extended to 100 degrees. In addition, the second angle between the vector $\vec{c}$ and the positive direction of the X axis is greater than 80 degrees. For example, the first angle between the vector $\vec{a}$ and the positive direction of the X axis and the second angle between the vector $\vec{c}$ and the positive direction of the X axis are sorted. The first angle is the smaller angle, and the second angle is the larger angle. If the smaller angle is in a range of 80 degrees to 100 degrees, and the larger angle is greater than the smaller angle by more than 20 degrees, a terminal corresponding to the smaller angle is used as the driver terminal. It may be understood that 80 degrees to 100 degrees herein is merely an example description, and is not specifically limited.

Another angle relationship between the first angle and the second angle is that a first included angle between the vector $\vec{a}$ and the vector $\vec{c}$ is less than or equal to a preset angle threshold, for example, 20 degrees. For example, if the angle between the vector $\vec{a}$ and the positive direction of the X axis and the angle between the vector $\vec{c}$ and the positive direction of the X axis are both within 70 degrees to 110 degrees, and the first included angle between the vector $\vec{a}$ and the vector $\vec{c}$ is less than 20 degrees, it is impossible to determine which terminal in the terminal A and the terminal C is the driver terminal. In this case, a first angle between the vector $\vec{a}$ and the positive direction of the X axis at the historical moment and a second angle between the vector $\vec{c}$ and the positive direction of the X axis at the historical moment may be obtained. Because the driver gets on from the left side of the vehicle, and a co-driver gets on from the right side of the vehicle, an angle between a direction from the in-vehicle infotainment to the driver terminal and the positive direction of the X axis increases continuously in a process of the driver from the outside of the vehicle to the inside of the vehicle, and an angle between a direction from the in-vehicle infotainment to a co-driver terminal and the positive direction of the X axis decreases continuously in a process of the co-driver from the outside of the vehicle to the inside of the vehicle. Therefore, if from the historical moment to the current moment, the first angle between the vector $\vec{a}$ and the positive direction of the X axis becomes larger, and the second angle between the vector $\vec{c}$ and the positive direction of the X axis becomes smaller, the terminal A is determined as the driver terminal, and the terminal C is determined as the co-driver terminal.

Another angle relationship between the first angle and the second angle is as follows: The angle between the vector $\vec{a}$ and the positive direction of the X axis and the angle between the vector $\vec{c}$ and the positive direction of the X axis are both within a range of 0 degrees to 70 degrees. Alternatively, the angle between the vector $\vec{a}$ and the positive direction of the X axis and the angle between the vector $\vec{c}$ and the positive direction of the X axis are both within a range of 110 degrees to 180 degrees. Herein, the range of 0 degrees to 70 degrees may be denoted as a first preset angle range, and the range of 110 degrees to 180 degrees may be denoted as a second preset angle range. In this case, a terminal that is most recently connected to the in-vehicle infotainment in the terminal A and the terminal C may be used as the driver terminal. It may be understood that 0 degrees to 70 degrees and 110 degrees to 180 degrees herein are merely examples for description, and the first preset angle range and the second preset angle range are not specifically limited.

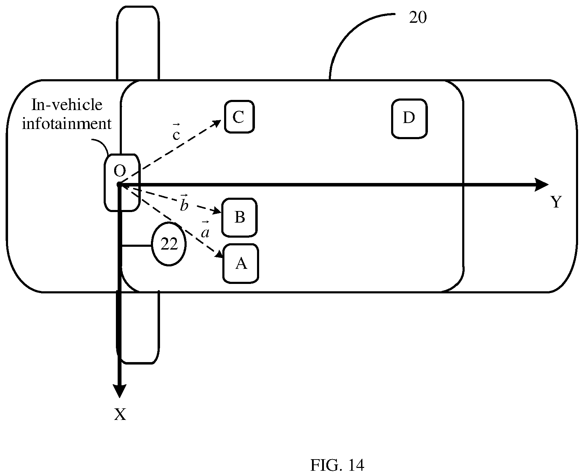

In another possible case, there are two or more terminals whose angles and distances can be positioned in the vehicle, and there are more than two terminals whose angles and distances can be positioned in a front-row area. In addition, there may be another terminal whose angle and distance cannot be positioned in the vehicle. As shown in FIG. 14, a terminal A, a terminal B, a terminal C, and a terminal D are terminals whose angles and distances can be positioned in the vehicle. Based on respective distances of the terminal A, the terminal B, the terminal C, and the terminal D relative to the in-vehicle infotainment, it may be determined that the terminal A, the terminal B, and the terminal C are all in the front-row area, and the terminal D is in a rear-row area. In other words, the distances of the terminal A, the terminal B, and the terminal C relative to the in-vehicle infotainment are all less than or equal to a preset distance. Herein, a direction from the in-vehicle infotainment to the terminal A is denoted as a first direction, namely, a direction of a vector $\vec{a}$; a direction from the in-vehicle infotainment to the terminal C is denoted as a second direction, namely, a direction of a vector $\vec{b}$; and a direction from the in-vehicle infotainment to the terminal B is denoted as a third direction, namely, a direction of a vector $\vec{b}$. An angle between the vector $\vec{a}$ and a positive direction of an X axis is denoted as a first angle, an angle between the vector $\vec{c}$ and the positive direction of the X axis is denoted as a second angle, and an angle between the vector $\vec{b}$ and the positive direction of the X axis is denoted as a third angle. The following provides descriptions in determining a driver terminal in the terminal A, the terminal B, and the terminal C based on an angle relationship between the first angle, the second angle, and the third angle.

An angle relationship between the first angle, the second angle, and the third angle is as follows: The first angle is less than the second angle, the third angle is less than the second angle, a first included angle between the first direction and the second direction is greater than a preset angle threshold, and a second included angle between the third direction and the second direction is also greater than the preset angle threshold. In this case, a terminal that is most recently connected to the in-vehicle infotainment in the terminal A and the terminal B is determined as the driver terminal. Specifically, the first angle between the vector $\vec{a}$ and the positive direction of the X axis is less than 100 degrees, the third angle between the vector $\vec{b}$ and the positive direction of the X axis is less than 100 degrees, the second angle between the vector $\vec{c}$ and the positive direction of the X axis is greater than 80 degrees, the first included angle between the vector $\vec{a}$ and the vector $\vec{c}$ on both sides of the Y axis is greater than 20 degrees, and the second included angle between the vector $\vec{b}$ and the vector $\vec{c}$ on both sides of the Y axis is also greater than 20 degrees. In this case, the terminal that is most recently connected to the in-vehicle infotainment in the terminal A and the terminal B is used as the driver terminal. For example, the first angle between the vector $\vec{a}$ and the positive direction of the X axis, the third angle between the vector $\vec{b}$ and the positive direction of the X axis, and the second angle between the vector $\vec{c}$ and the positive direction of the X axis are sorted. The first angle is the smallest, the third angle is the second, and the second angle is the largest. For example, the first angle and the third angle are both less than 100 degrees. In other words, there are two terminals whose angles relative to the in-vehicle infotainment are within a range of 100 degrees. In this case, a terminal that is most recently connected to the in-vehicle infotainment is determined from the two terminals as the driver terminal.

Another angle relationship between the first angle, the second angle, and the third angle is as follows: The first included angle between the vector $\vec{a}$ and the vector $\vec{c}$ is less than or equal to 20 degrees, and the second included angle between the vector $\vec{b}$ and the vector $\vec{c}$ is also less than or equal to 20 degrees. For example, the angle between the vector $\vec{a}$ and the positive direction of the X axis, the angle between the vector $\vec{b}$ and the positive direction of the X axis, and the angle between the vector $\vec{c}$ and the positive direction of the X axis are all within 70 degrees to 110 degrees. In addition, an included angle between any two of the vector $\vec{a}$, the vector $\vec{b}$, and the vector $\vec{c}$ is less than or equal to 20 degrees. Therefore, it is impossible to determine which terminal in the terminal A, the terminal B, and the terminal C is the driver terminal. In this case, a first angle between the vector $\vec{a}$ and the positive direction of the X axis at the historical moment, a second angle between the vector $\vec{c}$ and the positive direction of the X axis at the historical moment, and a third angle between the vector $\vec{b}$ and the positive direction of the X axis at the historical moment may be obtained. If from the historical moment to the current moment, the first angle between the vector $\vec{a}$ and the positive direction of the X axis becomes larger, the third angle between the vector $\vec{b}$ and the positive direction of the X axis also becomes larger, and the second angle between the vector $\vec{c}$ and the positive direction of the X axis becomes smaller, it may be determined that the terminal A and the terminal B are driver terminals, and the terminal C is a co-driver terminal. Further, a terminal that is most recently connected to the in-vehicle infotainment in the terminal A and the terminal B may be used as the driver terminal.

Another angle relationship between the first angle, the second angle, and the third angle is as follows: The angle between the vector $\vec{a}$ and the positive direction of the X axis, the angle between the vector $\vec{b}$ and the positive direction of the X axis, and the angle between the vector $\vec{c}$ and the positive direction of the X axis are all within a range of 0 degrees to 70 degrees. Alternatively, the angle between the vector $\vec{a}$ and the positive direction of the X axis, the angle between the vector $\vec{b}$ and the positive direction of the X axis, and the angle between the vector $\vec{c}$ and the positive direction of the X axis are all within a range of 110 degrees to 180 degrees. Herein, the range of 0 degrees to 70 degrees may be denoted as a first preset angle range, and the range of 110 degrees to 180 degrees may be denoted as a second preset angle range. In this case, a terminal that is most recently connected to the in-vehicle infotainment in the terminal A, the terminal B, and the terminal C may be used as the driver terminal. For example, the first angle between the vector $\vec{a}$ and the positive direction of the X axis, the third angle between the vector $\vec{b}$ and the positive direction of the X axis, and the second angle between the vector $\vec{c}$ and the positive direction of the X axis are sorted. The first angle is the smallest, the third angle is the second, and the second angle is the largest. If the smallest first angle is greater than 100 degrees, the terminal that is most recently connected to the in-vehicle infotainment in the terminal A, the terminal B, and the terminal C is used as the driver terminal.

It may be understood that when there are more than three terminals whose angles and distances can be positioned in the front-row area, a method for determining a driver terminal from the more than three terminals is similar to the foregoing method for determining a driver terminal from the terminal A, the terminal B, and the terminal C. Details are not described herein again.

In this embodiment, the driver terminal determining method is introduced for each of the plurality of cases that may exist in determining the quantity of terminals for which positioning can be implemented in the vehicle and the position distribution of the terminals for which positioning can be implemented in the vehicle, thereby improving accuracy and flexibility of driver terminal determining.

Based on the foregoing embodiments, the quantity and the positions of the terminals in the vehicle may change. When detecting a new driver terminal, the in-vehicle infotainment may disconnect a current connection, and establish a communication connection to the newly determined driver terminal. However, if the vehicle is in a running state at the current moment, the in-vehicle infotainment may no longer detect a latest driver terminal, or may not disconnect the current connection even if a latest driver terminal is detected, to avoid a constant change of the terminal connected to the in-vehicle infotainment. This is also for driving safety. In addition, if a terminal in the vehicle needs to be connected to the in-vehicle infotainment, a user of the terminal may manually connect the terminal to the in-vehicle infotainment. In this case, the in-vehicle infotainment may no longer detect the latest driver terminal, or may not disconnect the current connection even if the latest driver terminal is detected.

It may be understood that some or all of the steps or operations in the foregoing embodiments are merely examples. In this embodiment of this application, other operations or variations of the operations may further be performed. In addition, the steps may be performed in a sequence different from the sequence presented in the foregoing embodiments, and not all operations in the foregoing embodiments are necessarily to be performed.

It may be understood that, in the foregoing embodiments, the operations or the steps implemented by the vehicle-mounted device may alternatively be implemented by a component (for example, a chip or a circuit) that can be used for the vehicle-mounted device.

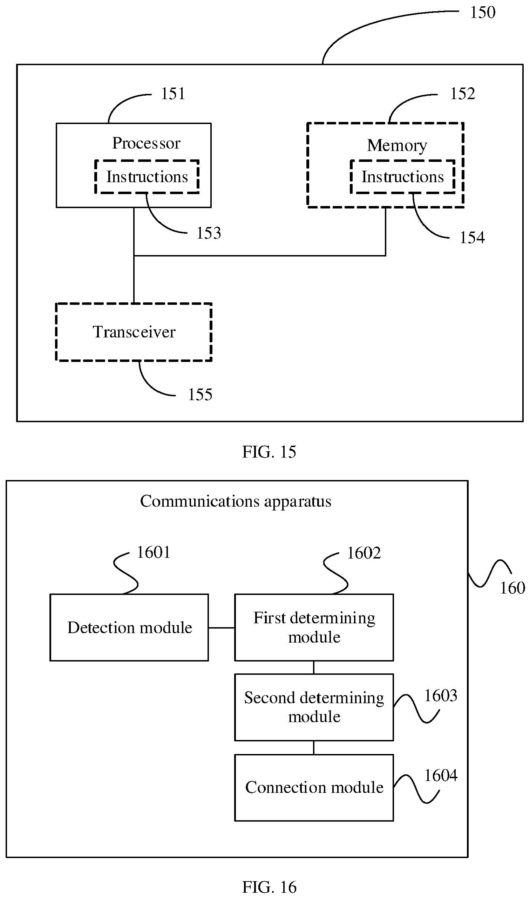

FIG. 15 is a schematic diagram of a structure of a communications apparatus. The communications apparatus may be configured to implement a method corresponding to the vehicle-mounted device (for example, the in-vehicle infotainment) described in the foregoing method embodiments. For details, refer to the descriptions in the foregoing method embodiments.

The communications apparatus 150 may include one or more processors 151. The processor 151 may also be referred to as a processing unit, and may implement a specific control function. The processor 151 may be a general-purpose processor, a dedicated processor, or the like.

In an optional design, the processor 151 may also store instructions 153, and the instructions may be run by the processor, so that the communications apparatus 150 performs the method corresponding to the vehicle-mounted device in the foregoing method embodiments.

In another possible design, the communications apparatus 150 may include a circuit. The circuit may implement a sending, receiving, or communication function in the foregoing method embodiments.

Optionally, the communications apparatus 150 may include one or more memories 152. The memory stores instructions 154 or intermediate data. The instructions 154 may be run on the processor, so that the communications apparatus 150 performs the method in the foregoing method embodiments. Optionally, the memory may further store other related data. Optionally, the processor may also store instructions and/or data. The processor and the memory may be separately disposed, or may be integrated together.

Optionally, the communications apparatus 150 may further include a transceiver 155.

The processor 151 may be referred to as a processing unit. The transceiver 155 may be referred to as a transceiver unit, a transceiver machine, a transceiver circuit, a transceiver, or the like, and is configured to implement a transceiver function of the communications apparatus.

When the communications apparatus is configured to implement an operation corresponding to the in-vehicle infotainment in the embodiment shown in FIG. 4, for example, the transceiver may receive AOA broadcast signals from the terminal A and the terminal B, the transceiver may further complete another corresponding communication function. The processor is configured to complete a corresponding determining or control operation, and optionally, may further store corresponding instructions in the memory. For a specific processing manner of each component, refer to related descriptions in the foregoing embodiments.

The processor and the transceiver in this application may be implemented in an integrated circuit (integrated circuit, IC), an analog IC, a radio frequency integrated circuit RFIC, a mixed-signal IC, an application-specific integrated circuit (application-specific integrated circuit, ASIC), a printed circuit board (printed circuit board, PCB), an electronic device, or the like. The processor and the transceiver may also be manufactured by using various IC process technologies, for example, a complementary metal oxide semiconductor (complementary metal oxide semiconductor, CMOS), an n-type metal oxide semiconductor (nMetal-oxide-semiconductor, NMOS), a p-channel metal oxide semiconductor (positive channel metal oxide semiconductor, PMOS), a bipolar junction transistor (Bipolar Junction Transistor, BJT), a bipolar CMOS (BiCMOS), silicon germanium (SiGe), gallium arsenide (GaAs), and the like.

Optionally, the communications apparatus may be an independent device or may be a part of a relatively large device. For example, the device may be:

(1) an independent integrated circuit IC, a chip, or a chip system or subsystem;
(2) a set having one or more ICs, where optionally, the IC set may also include a storage component configured to store data and/or instructions;
(3) an ASIC, for example, a modem (MSM);
(4) a module that can be embedded in another device;
(5) a receiver, a terminal, a cellular phone, a wireless device, a handheld device, a mobile unit, a network device, or the like; or
(6) others, or the like.

FIG. 16 is a schematic diagram of a structure of a communications apparatus according to an embodiment of this application. As shown in FIG. 16, a communications apparatus 160 includes a detection module 1601, a first determining module 1602, a second determining module 1603, and a connection module 1604. The detection module 1601 is configured to detect a wireless signal sent by at least one terminal in a vehicle. The first determining module 1602 is configured to determine position information of the at least one terminal relative to a vehicle-mounted device based on the wireless signal. The second determining module 1603 is configured to determine a driver terminal in the at least one terminal based on the position information of the at least one terminal relative to the vehicle-mounted device. The connection module 1604 is configured to establish a communication connection to the driver terminal.

In FIG. 16, further, the position information includes an angle and a distance.

In FIG. 16, further, when determining an angle of the at least one terminal relative to the vehicle-mounted device based on the wireless signal, the first determining module 1602 is specifically configured to determine the angle of the at least one terminal relative to the vehicle-mounted device based on an angle of arrival and/or an angle of departure of the wireless signal.

In a possible manner, when determining a distance of the at least one terminal relative to the vehicle-mounted device based on the wireless signal, the first determining module 1602 is specifically configured to determine the distance of the at least one terminal relative to the vehicle-mounted device based on signal strength of the wireless signal.

In another possible manner, when determining a distance of the at least one terminal relative to the vehicle-mounted device based on the wireless signal, the first determining module 1602 is specifically configured to determine the distance of the at least one terminal relative to the vehicle-mounted device based on an angle of arrival and/or an angle of departure of the wireless signal.

In another possible manner, when determining a distance of the at least one terminal relative to the vehicle-mounted device based on the wireless signal, the first determining module 1602 is specifically configured to determine the distance of the at least one terminal relative to the vehicle-mounted device based on signal strength and an angle of arrival and/or an angle of departure of the wireless signal.

Optionally, when determining the driver terminal in the at least one terminal based on the position information of the at least one terminal relative to the vehicle-mounted device, the second determining module 1603 is specifically configured to: determine, based on the position information of the at least one terminal relative to the vehicle-mounted device, whether the terminal is in a driver position area; and if the terminal is in the driver position area, determine the terminal as the driver terminal.

Optionally, when determining, based on the position information of the at least one terminal relative to the vehicle-mounted device, whether the terminal is in the driver position area, the second determining module 1603 is specifically configured to: if an angle of the terminal relative to the vehicle-mounted device matches an angle of a driver position relative to the vehicle-mounted device, and a distance of the terminal relative to the vehicle-mounted device is less than or equal to a preset distance, determine that the terminal is in the driver position area.

Optionally, when determining the driver terminal in the at least one terminal based on the position information of the at least one terminal relative to the vehicle-mounted device, the second determining module 1603 is specifically configured to: if a distance of the terminal relative to the vehicle-mounted device is less than or equal to a preset distance, and an angle of the terminal relative to the vehicle-mounted device becomes larger from a historical moment to a current moment, determine the terminal as the driver terminal, where the angle of the terminal relative to the vehicle-mounted device includes an angle between a direction from the vehicle-mounted device to the terminal and a first reference direction, the first reference direction is parallel to a vehicle body plane and is from the vehicle-mounted device to a left side of the vehicle, and a time interval from the historical moment to the current moment is less than or equal to a preset time.

Optionally, when determining the driver terminal in the at least one terminal based on the position information of the at least one terminal relative to the vehicle-mounted device, the second determining module 1603 is specifically configured to: if an angle of the terminal relative to the vehicle-mounted device becomes larger when the terminal is in a driver position area, determine the terminal as the driver terminal, where the angle of the terminal relative to the vehicle-mounted device includes an angle between a direction from the vehicle-mounted device to the terminal and a first reference direction, and the first reference direction is parallel to a vehicle body plane and is from the vehicle-mounted device to a left side of the vehicle.

Optionally, the at least one terminal includes a first terminal and a second terminal. An angle of the first terminal relative to the vehicle-mounted device includes a first angle between a first direction from the vehicle-mounted device to the first terminal and a first reference direction. The first reference direction is parallel to a vehicle body plane and is from the vehicle-mounted device to a left side of the vehicle. An angle of the second terminal relative to the vehicle-mounted device includes a second angle between a second direction from the vehicle-mounted device to the second terminal and the first reference direction.

Optionally, when determining the driver terminal in the at least one terminal based on the position information of the at least one terminal relative to the vehicle-mounted device, the second determining module 1603 is specifically configured to: if a distance of the first terminal relative to the vehicle-mounted device is less than or equal to a preset distance, a distance of the second terminal relative to the vehicle-mounted device is greater than the preset distance, and the first angle is within a first preset angle range, determine the first terminal as the driver terminal.

Optionally, when determining the driver terminal in the at least one terminal based on the position information of the at least one terminal relative to the vehicle-mounted device, the second determining module 1603 is specifically configured to: if a distance of the first terminal relative to the vehicle-mounted device and a distance of the second terminal relative to the vehicle-mounted device are both less than or equal to a preset distance, the first angle is less than the second angle, and a first included angle between the first direction and the second direction is greater than a preset angle threshold, determine the first terminal as the driver terminal.

Optionally, the at least one terminal further includes a third terminal, and an angle of the third terminal relative to the vehicle-mounted device includes a third angle between a third direction from the vehicle-mounted device to the third terminal and the first reference direction.

Optionally, when determining the driver terminal in the at least one terminal based on the position information of the at least one terminal relative to the vehicle-mounted device, the second determining module 1603 is specifically configured to: if a distance of the first terminal relative to the vehicle-mounted device, a distance of the second terminal relative to the vehicle-mounted device, and a distance of the third terminal relative to the vehicle-mounted device are all less than or equal to a preset distance, the first angle is less than the second angle, the third angle is less than the second angle, a first included angle between the first direction and the second direction is greater than a preset angle threshold, and a second included angle between the third direction and the second direction is greater than the preset angle threshold, determine a terminal that is most recently connected to the vehicle-mounted device in the first terminal and the third terminal as the driver terminal.

Optionally, when determining the driver terminal in the at least one terminal based on the position information of the at least one terminal relative to the vehicle-mounted device, the second determining module 1603 is specifically configured to: if a distance of the first terminal relative to the vehicle-mounted device and a distance of the second terminal relative to the vehicle-mounted device are both less than or equal to a preset distance, and a first included angle between the first direction and the second direction is less than or equal to a preset angle threshold, obtain a first angle at a historical moment and a second angle at the historical moment; and if the first angle becomes larger and the second angle become smaller from the historical moment to a current moment, determine the first terminal as the driver terminal.

Optionally, when determining the driver terminal in the at least one terminal based on the position information of the at least one terminal relative to the vehicle-mounted device, the second determining module 1603 is specifically configured to: if a distance of the first terminal relative to the vehicle-mounted device, a distance of the second terminal relative to the vehicle-mounted device, and a distance of the third terminal relative to the vehicle-mounted device are all less than or equal to a preset distance, a first included angle between the first direction and the second direction is less than or equal to a preset angle threshold, a second included angle between the third direction and the second direction is less than or equal to the preset angle threshold, obtain a first angle at a historical moment, a second angle at the historical moment, and a third angle at the historical moment; and if the first angle and the third angle become larger and the second angle becomes smaller from the historical moment to a current moment, determine a terminal that is most recently connected to the vehicle-mounted device in the first terminal and the third terminal as the driver terminal.

Optionally, when determining the driver terminal in the at least one terminal based on the position information of the at least one terminal relative to the vehicle-mounted device, the second determining module 1603 is specifically configured to: if a distance of the first terminal relative to the vehicle-mounted device and a distance of the second terminal relative to the vehicle-mounted device are both less than or equal to a preset distance, and the first angle and the second angle are both within a first preset angle range or a second preset angle range, determine a terminal that is most recently connected to the vehicle-mounted device in the first terminal and the second terminal as the driver terminal.

Optionally, when determining the driver terminal in the at least one terminal based on the position information of the at least one terminal relative to the vehicle-mounted device, the second determining module 1603 is specifically configured to: if a distance of the first terminal relative to the vehicle-mounted device, a distance of the second terminal relative to the vehicle-mounted device, and a distance of the third terminal relative to the vehicle-mounted device are all less than or equal to a preset distance, and the first angle, the second angle, and the third angle are all within a first preset angle range or a second preset angle range, determine a terminal that is most recently connected to the vehicle-mounted device in the first terminal, the second terminal, and the third terminal as the driver terminal.

Optionally, the angle of the terminal relative to the vehicle-mounted device includes an angle between a direction from the vehicle-mounted device to the terminal and a second reference direction, and the second reference direction is parallel to a vehicle body plane and is from the front of the vehicle to the rear of the vehicle.

The communications apparatus in the embodiment shown in FIG. 16 may be configured to perform the technical solution in the foregoing method embodiments. For an implementation principle and a technical effect of the communications apparatus, further refer to related description in the method embodiments. Optionally, the communications apparatus may be a vehicle-mounted device, or may be a component (for example, a chip or a circuit) of a vehicle-mounted device.

It should be understood that division into the foregoing modules of the communications apparatus shown in FIG. 16 is merely logical function division. In an actual implementation, all or some of the modules may be integrated into one physical entity, or may be physically separated. In addition, all of the modules may be implemented in a form of software invoked by a processing element or in a form of hardware. Alternatively, some of the modules may be implemented in a form of software invoked by a processing element, and some of the modules may be implemented in a form of hardware. For example, the first determining module may be an independent processing element, or may be integrated into the communications apparatus, for example, a chip of the vehicle-mounted device for implementation. In addition, the first determining module may alternatively be stored in a memory of the communications apparatus in a form of a program and invoked by a processing element of the communications apparatus to perform a function of each of the foregoing modules. An implementation of another module is similar to the implementation of the first determining module. In addition, all or some of these modules may be integrated together, or may be implemented independently. The processing element herein may be an integrated circuit and has a signal processing capability. In an implementation process, steps in the foregoing methods or the foregoing modules may be implemented by using a hardware integrated logical circuit in the processing element, or by using instructions in a form of software.

For example, the foregoing modules may be configured as one or more integrated circuits for implementing the foregoing methods, for example, one or more application-specific integrated circuits (Application-Specific Integrated Circuits, ASIC), one or more microprocessors (digital signal processors, DSP), or one or more field programmable gate arrays (Field Programmable Gate Arrays, FPGA). For another example, when one of the foregoing modules is implemented in a form of a processing element scheduling a program, the processing element may be a general-purpose processor, for example a central processing unit (Central Processing Unit, CPU) or another processor that can invoke the program. For another example, these modules may be integrated together and implemented in a form of a system-on-a-chip (system-on-a-chip, SOC).

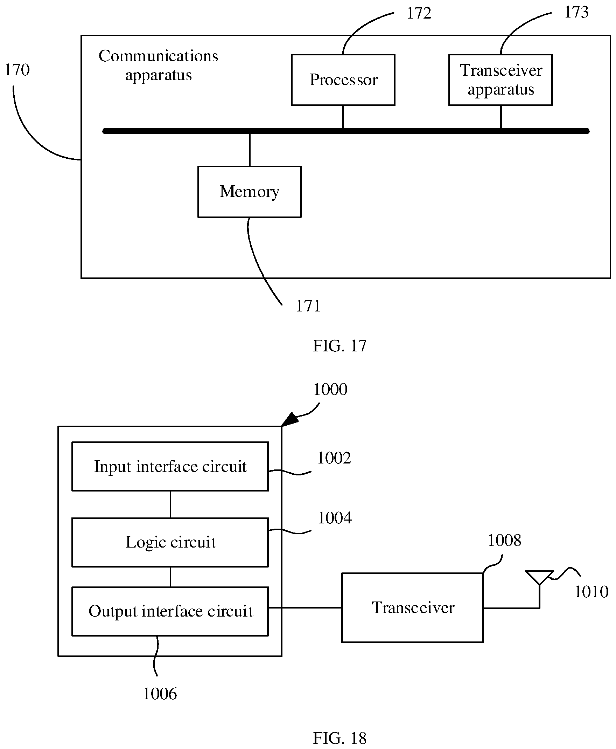

FIG. 17 is a schematic diagram of a structure of another communications apparatus according to an embodiment of this application. As shown in FIG. 17, a communications apparatus 170 includes a processor 172 and a transceiver apparatus 173. The transceiver apparatus 173 receives a wireless signal from at least one terminal. The processor 172 determines position information of the at least one terminal relative to a vehicle-mounted device based on the wireless signal sent by the at least one terminal, determines a driver terminal in the at least one terminal based on the position information of the at least one terminal relative to the vehicle-mounted device, and establishes a communication connection to the driver terminal. Further, a memory 171 is included, and the memory 171 is configured to store a computer program or instructions. The processor 172 is configured to invoke the program or the instructions.

The communications apparatus in the embodiment shown in FIG. 17 may be configured to perform the technical solution in the foregoing method embodiments. For an implementation principle and a technical effect of the communications apparatus, further refer to related description in the method embodiments. Details are not described herein again. The communications apparatus may be a vehicle-mounted device, or may be a component (for example, a chip or a circuit) of a vehicle-mounted device.

Optionally, the processor 172 may be configured to implement corresponding functions of the first determining module 1602 and the second determining module 1603 of the communications apparatus shown in FIG. 16. Alternatively, some or all of the foregoing modules may be implemented in a form of an integrated circuit that is embedded in a chip of the terminal. In addition, the modules may be separately implemented, or may be integrated together. To be specific, the foregoing modules may be configured as one or more integrated circuits for implementing the foregoing methods, for example, one or more application-specific integrated circuits (Application-Specific Integrated Circuits, ASIC), one or more microprocessors (digital signal processors, DSP), or one or more field programmable gate arrays (Field Programmable Gate Arrays, FPGA).

An embodiment of this application further provides a computer-readable storage medium. The computer-readable storage medium stores a computer program. When the computer program runs on a computer, the computer is enabled to perform the communication connection method according to the foregoing embodiments.

In addition, an embodiment of this application further provides a computer program product. The computer program product includes a computer program. When the computer program runs on a computer, the computer is enabled to perform the communication connection method according to the foregoing embodiments.

In addition, an embodiment of this application further provides a processor. The processor includes at least one circuit, configured to perform the communication connection method according to the foregoing embodiments.

In addition, an embodiment of this application further provides a system. The system includes the foregoing terminal and vehicle-mounted device.

All or some of the foregoing embodiments may be implemented through software, hardware, firmware, or any combination thereof. When software is used to implement embodiments, all or some of the embodiments may be implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk)), or the like.

Based on a same inventive concept as the methods provided in the foregoing embodiments of this application, an embodiment of this application further provides a communications apparatus, configured to implement the methods in the foregoing embodiments. Some or all of the methods in the foregoing embodiments may be implemented by hardware or software. When the methods are implemented by hardware, as shown in FIG. 18, a communications apparatus 1000 includes an input interface circuit 1002, a logic circuit 1004, and an output interface circuit 1006. In addition, the communications apparatus 1000 further includes a transceiver 1008 and an antenna 1010. The transceiver 1008 transmits and receives data through the antenna 1010.

The logic circuit 1004 is configured to perform the communication connection method shown in FIG. 3. For details, refer to the descriptions in the foregoing method embodiments. The details are not described herein again. In a specific implementation, the communications apparatus 1000 may be a chip or an integrated circuit.

**Claims**

1.  A communication connection method, applied to a vehicle-mounted device, wherein the method comprises:

    detecting (S301) a wireless signal sent by at least one terminal (A, B, C, D) in a vehicle (20);
    determining (S302) position information of the at least one terminal (A, B, C, D) relative to the vehicle-mounted device based on the wireless signal; and
    determining (S303) a driver terminal (D) in the at least one terminal based on the position information of the at least one terminal relative to the vehicle-mounted device, wherein the determining (S303) a driver terminal (D) in the at least one terminal (A, B, C, D) based on the position information of the at least one terminal relative to the vehicle-mounted device comprises:

    determining, based on the position information of the at least one terminal (A, B, C, D ) relative to the vehicle-mounted device, whether the terminal is in a driver position area, wherein the terminal is determined to be in a driver position area when it is determined that it has moved from the driver's side front door to the driver position; and
    if the terminal is determined to be in the driver position area, determining the terminal as the driver terminal (D), and

    establishing a communication connection to the determined driver terminal (D).

2.  The method according to claim 1, wherein the position information comprises an angle and a distance.

3.  The method according to claim 2, wherein the determining an angle of the at least one terminal (A, B, C, D) relative to the vehicle-mounted device based on the wireless signal comprises:
    determining the angle of the at least one terminal (A, B, C, D ) relative to the vehicle-mounted device based on an angle of arrival and/or an angle of departure of the wireless signal.

4.  The method according to claim 2, wherein the determining a distance of the at least one terminal (A, B, C, D ) relative to the vehicle-mounted device based on the wireless signal
    determining the distance of the at least one terminal (A, B, C, D ) relative to the vehicle-mounted device based on signal strength of the wireless signal.

5.  The method according to claim 2, wherein the determining a distance of the at least one terminal relative (A, B, C, D ) to the vehicle-mounted device based on the wireless signal comprises:
    determining the distance of the at least one terminal (A, B, C, D ) relative to the vehicle-mounted device based on an angle of arrival and/or an angle of departure of the wireless signal.

6.  The method according to claim 2, wherein the determining a distance of the at least one terminal (A, B, C, D ) relative to the vehicle-mounted device based on the wireless signal comprises:
    determining the distance of the at least one terminal (A, B, C, D ) relative to the vehicle-mounted device based on signal strength and an angle of arrival and/or an angle of departure of the wireless signal.

7. The method according to claim 1, wherein the determining (S303), based on the position information of the at least one terminal (A, B, C, D) relative to the vehicle-mounted device, whether the terminal is in a driver position area further comprises:
if an angle of the terminal (A, B, C, D) relative to the vehicle-mounted device matches an angle of a driver position relative to the vehicle-mounted device, and a distance of the terminal relative to the vehicle-mounted device is less than or equal to a preset distance, determining that the terminal is in the driver position area.

8. The method according to claim 1, wherein the determining (S303) a driver terminal (D) in the at least one terminal (A, B, C, D) based on the position information of the at least one terminal relative to the vehicle-mounted device comprises:

if a distance of the terminal relative to the vehicle-mounted device is less than or equal to a preset distance, and an angle of the terminal relative to the vehicle-mounted device becomes larger from a historical moment to a current moment, determining the terminal as the driver terminal (D), wherein
the angle of the terminal relative to the vehicle-mounted device comprises an angle between a direction from the vehicle-mounted device to the terminal and a first reference direction, the first reference direction is parallel to a vehicle body plane and is from the vehicle-mounted device to a left side of the vehicle, and a time interval from the historical moment to the current moment is less than or equal to a preset time.

9. The method according to claim 1, wherein the determining (S303) a driver terminal (D) in the at least one terminal based on the position information of the at least one terminal relative to the vehicle-mounted device comprises:

if an angle of the terminal relative to the vehicle-mounted device becomes larger when the terminal is in a driver position area, determining the terminal as the driver terminal (D), wherein
the angle of the terminal relative to the vehicle-mounted device comprises an angle between a direction from the vehicle-mounted device to the terminal and a first reference direction, and the first reference direction is parallel to a vehicle body plane and is from the vehicle-mounted device to a left side of the vehicle.

10. The method according to claim 1 or 2, wherein the at least one terminal (A, B, C, D) comprises a first terminal and a second terminal;

an angle of the first terminal relative to the vehicle-mounted device comprises a first angle between a first direction from the vehicle-mounted device to the first terminal and a first reference direction, and the first reference direction is parallel to a vehicle body plane and is from the vehicle-mounted device to a left side of the vehicle; and
an angle of the second terminal relative to the vehicle-mounted device comprises a second angle between a second direction from the vehicle-mounted device to the second terminal and the first reference direction.

11. The method according to claim 10, wherein the determining (S303) a driver terminal (D) in the at least one terminal (A, B, C, D) based on the position information of the at least one terminal relative to the vehicle-mounted device further comprises:
If a distance of the first terminal relative to the vehicle-mounted device is less than or equal to a preset distance, a distance of the second terminal relative to the vehicle-mounted device is greater than the preset distance, and the first angle is within a first preset angle range, determining the first terminal as the driver terminal (D).

12. The method according to claim 10, wherein the determining (S303) a driver terminal (D) in the at least one terminal (A, B, C, D) based on the position information of the at least one terminal relative to the vehicle-mounted device further comprises:
if a distance of the first terminal relative to the vehicle-mounted device and a distance of the second terminal relative to the vehicle-mounted device are both less than or equal to a preset distance, the first angle is less than the second angle, and a first included angle between the first direction and the second direction is greater than a preset angle threshold, determining the first terminal as the driver terminal (D).

13. A communications apparatus (150), comprising a processor (151) and a transceiver (155), wherein the processor and the transceiver communicate with each other through an internal connection, and the processor is configured to perform a processing step in the method according to any one of claims 1 to 12.

14. A computer-readable storage medium, configured to store a computer program, wherein the computer program comprises instructions used to perform the method according to any one of claims 1 to 12.

**Patentansprüche**

1. Kommunikationsverbindungsverfahren, das auf ein fahrzeugseitiges Gerät angewendet wird, wobei das Verfahren Folgendes umfasst:

   Detektieren (S301) eines drahtlosen Signals, das von mindestens einem Endgerät (A, B, C, D) in einem Fahrzeug (20) gesendet wird;
   Bestimmen (S302) von Positionsinformationen des mindestens einen Endgeräts (A, B, C, D) relativ zu dem fahrzeugseitigen Gerät basierend auf dem drahtlosen Signal; und
   Bestimmen (S303) eines Fahrerendgeräts (D) in dem mindestens einen Endgerät basierend auf den Positionsinformationen des mindestens einen Endgeräts relativ zu dem fahrzeugseitigen Gerät, wobei das Bestimmen (S303) eines Fahrerendgeräts (D) in dem mindestens einen Endgerät (A, B, C, D) basierend auf den Positionsinformationen des mindestens einen Endgeräts relativ zu dem fahrzeugseitigen Gerät Folgendes umfasst:

   Bestimmen, basierend auf den Positionsinformationen des mindestens einen Endgeräts (A, B, C, D) relativ zu dem fahrzeugseitigen Gerät, ob das Endgerät sich in einem Fahrerpositionsbereich befindet, wobei bestimmt wird, dass sich das Endgerät in einem Fahrerpositionsbereich befindet, wenn bestimmt wird, dass es sich von der seitlichen Vordertür des Fahrers zu der Fahrerposition bewegt hat; und
   wenn bestimmt wird, dass sich das Endgerät in dem Fahrerpositionsbereich befindet, Bestimmen des Endgeräts als das Fahrerendgerät (D), und
   Herstellen einer Kommunikationsverbindung zu dem bestimmten Fahrerendgerät (D).

2. Verfahren nach Anspruch 1, wobei die Positionsinformationen einen Winkel und einen Abstand umfassen.

3. Verfahren nach Anspruch 2, wobei das Bestimmen eines Winkels des mindestens einen Endgeräts (A, B, C, D) relativ zu dem fahrzeugseitigen Gerät basierend auf dem drahtlosen Signal Folgendes umfasst:
   Bestimmen des Winkels des mindestens einen Endgeräts (A, B, C, D) relativ zu dem fahrzeugseitigen Gerät basierend auf einem Ankunftswinkel und/oder einem Abgangswinkel des drahtlosen Signals.

4. Verfahren nach Anspruch 2, wobei das Bestimmen eines Abstands des mindestens einen Endgeräts (A, B, C, D) relativ zu dem fahrzeugseitigen Gerät basierend auf dem drahtlosen Signal Folgendes umfasst:
   Bestimmen des Abstands des mindestens einen Endgeräts (A, B, C, D) relativ zu dem fahrzeugseitigen Gerät basierend auf Signalstärke des drahtlosen Signals.

5. Verfahren nach Anspruch 2, wobei das Bestimmen eines Abstands des mindestens einen Endgeräts (A, B, C, D) relativ zu dem fahrzeugseitigen Gerät basierend auf dem drahtlosen Signal Folgendes umfasst:
   Bestimmen des Abstands des mindestens einen Endgeräts (A, B, C, D) relativ zu dem fahrzeugseitigen Gerät basierend auf einem Ankunftswinkel und/oder einem Abgangswinkel des drahtlosen Signals.

6. Verfahren nach Anspruch 2, wobei das Bestimmen eines Abstands des mindestens einen Endgeräts (A, B, C, D) relativ zu dem fahrzeugseitigen Gerät basierend auf dem drahtlosen Signal Folgendes umfasst:
   Bestimmen des Abstands des mindestens einen Endgeräts (A, B, C, D) relativ zu dem fahrzeugseitigen Gerät basierend auf Signalstärke und einem Ankunftswinkel und/oder einem Abgangswinkel des drahtlosen Signals.

7. Verfahren nach Anspruch 1, wobei das Bestimmen (S303), basierend auf den Positionsinformationen des mindestens einen Endgeräts (A, B, C, D) relativ zu dem fahrzeugseitigen Gerät, ob sich das Endgerät in einem Fahrerpositionsbereich befindet, ferner Folgendes umfasst:
   wenn ein Winkel des Endgeräts (A, B, C, D) relativ zu dem fahrzeugseitigen Gerät mit einem Winkel einer Fahrerposition relativ zu dem fahrzeugseitigen Gerät übereinstimmt und ein Abstand des Endgeräts relativ zu dem fahrzeugseitigen Gerät kleiner oder gleich einem voreingestellten Abstand ist, Bestimmen, dass sich das Endgerät in dem Fahrerpositionsbereich befindet.

8. Verfahren nach Anspruch 1, wobei das Bestimmen (S303) eines Fahrerendgeräts (D) in dem mindestens einen Endgerät (A, B, C, D) basierend auf den Positionsinformationen des mindestens einen Endgeräts relativ zu dem fahrzeugseitigen Gerät Folgendes umfasst:

   wenn ein Abstand des Endgeräts relativ zu dem fahrzeugseitigen Gerät kleiner oder gleich einem voreingestellten Abstand ist und ein Winkel des Endgeräts relativ zu dem fahrzeugseitigen Gerät von einem historischen Moment zu einem aktuellen Moment größer wird, Bestimmen des Endgeräts als das Fahrerendgerät (D), wobei der Winkel des Endgeräts relativ zu dem fahrzeugseitigen Gerät einen Winkel zwischen einer Richtung von dem fahrzeugseitigen Gerät zu dem Endgerät und einer ersten Referenzrichtung umfasst, die erste Referenzrichtung parallel zu einer Fahrzeugkarosserieebene ist und von dem fahrzeugseitigen Gerät zu einer linken Seite des Fahrzeugs verläuft und ein Zeitintervall von dem historischen Moment bis zu dem aktuellen Moment kleiner oder gleich einer voreingestellten Zeit ist.

9. Verfahren nach Anspruch 1, wobei das Bestimmen (S303) eines Fahrerendgeräts (D) in dem mindestens einen Endgerät basierend auf den Positionsinformationen des mindestens einen Endgeräts relativ zu dem fahrzeugseitigen Gerät Folgendes umfasst:

   wenn ein Winkel des Endgeräts relativ zu dem fahrzeugseitigen Gerät größer wird, wenn sich das Endgerät in einem Fahrerpositionsbereich befindet, Bestimmen des Endgeräts als Fahrerendgerät (D), wobei der Winkel des Endgeräts relativ zu dem fahrzeugseitigen Gerät einen Winkel zwischen einer Richtung von dem fahrzeugseitigen Gerät zu dem Endgerät und einer ersten Referenzrichtung umfasst und die erste Referenzrichtung parallel zu einer Fahrzeugkarosserieebene ist und von dem fahrzeugseitigen Gerät zu einer linken Seite des Fahrzeugs verläuft.

10. Verfahren nach Anspruch 1 oder 2, wobei das mindestens eine Endgerät (A, B, C, D) ein erstes Endgerät und ein zweites Endgerät umfasst;

    der Winkel des ersten Endgeräts relativ zu dem fahrzeugseitigen Gerät einen ersten Winkel zwischen einer ersten Richtung von dem fahrzeugseitigen Gerät zu dem ersten Endgerät und einer ersten Referenzrichtung umfasst und die erste Referenzrichtung parallel zu einer Fahrzeugkarosserieebene ist und von dem fahrzeugseitigen Gerät zu einer linken Seite des Fahrzeugs verläuft; und
    ein Winkel des zweiten Endgeräts relativ zu dem fahrzeugseitigen Gerät einen zweiten Winkel zwischen einer zweiten Richtung von dem fahrzeugseitigen Gerät zu dem zweiten Terminal und der ersten Referenzrichtung umfasst.

11. Verfahren nach Anspruch 10, wobei das Bestimmen (S303) eines Fahrerendgeräts (D) in dem mindestens einen Endgerät (A, B, C, D) basierend auf den Positionsinformationen des mindestens einen Endgeräts relativ zu dem fahrzeugseitigen Gerät ferner Folgendes umfasst:
    wenn ein Abstand des ersten Endgeräts relativ zu dem fahrzeugseitigen Gerät kleiner oder gleich einem voreingestellten Abstand ist, ein Abstand des zweiten Endgeräts relativ zu dem fahrzeugseitigen Gerät größer als der voreingestellte Abstand ist und der erste Winkel innerhalb eines ersten voreingestellten Winkelbereichs liegt, Bestimmen des ersten Endgeräts als das Fahrerendgerät (D).

12. Verfahren nach Anspruch 10, wobei das Bestimmen (S303) eines Fahrerendgeräts (D) in dem mindestens einen Endgerät (A, B, C, D) basierend auf den Positionsinformationen des mindestens einen Endgeräts relativ zu dem fahrzeugseitigen Gerät ferner Folgendes umfasst:
    wenn ein Abstand des ersten Endgeräts relativ zu dem fahrzeugseitigen Gerät und ein Abstand des zweiten Endgeräts relativ zu dem fahrzeugseitigen Gerät beide kleiner oder gleich einem voreingestellten Abstand sind, der erste Winkel kleiner als der zweite Winkel ist und ein erster eingeschlossener Winkel zwischen der ersten Richtung und der zweiten Richtung größer als ein voreingestellter Winkelschwellenwert ist, Bestimmen des ersten Endgeräts als das Fahrerendgerät (D).

13. Kommunikationsvorrichtung (150), umfassend einen Prozessor (151) und einen Sendeempfänger (155), wobei der Prozessor und der Sendeempfänger über eine interne Verbindung miteinander kommunizieren und der Prozessor dazu konfiguriert ist, einen Verarbeitungsschritt in dem Verfahren nach einem der Ansprüche 1 bis 12 durchzuführen.

14. Computerlesbares Speichermedium, das dazu konfiguriert ist, ein Computerprogramm zu speichern, wobei das Computerprogramm Anweisungen umfasst, die verwendet werden, um das Verfahren nach einem der Ansprüche 1 bis 12 durchzuführen.

**Revendications**

1. Procédé de connexion de communication, appliqué à un dispositif monté sur véhicule, dans lequel le procédé comprend :

la détection (S301) d'un signal sans fil envoyé par au moins un terminal (A, B, C, D) dans un véhicule (20) ;

la détermination (S302) d'informations de position de l'au moins un terminal (A, B, C, D) par rapport au dispositif monté sur véhicule sur la base du signal sans fil ; et

la détermination (S303) d'un terminal de conducteur (D) dans l'au moins un terminal sur la base des informations de position de l'au moins un terminal par rapport au dispositif monté sur véhicule, dans lequel la détermination (S303) d'un terminal de conducteur (D) dans l'au moins un terminal (A, B, C, D) sur la base des informations de position de l'au moins un terminal par rapport au dispositif monté sur véhicule comprend :

le fait de déterminer, sur la base des informations de position de l'au moins un terminal (A, B, C, D) par rapport au dispositif monté sur véhicule, si le terminal se trouve dans une zone de position de conducteur, dans lequel le terminal est déterminé comme étant dans une zone de position de conducteur lorsqu'il est déterminé qu'il s'est déplacé de la porte avant du côté conducteur à la position de conducteur ; et

si le terminal est déterminé comme se trouvant dans la zone de position de conducteur, la détermination du terminal comme étant le terminal de conducteur (D), et

l'établissement d'une connexion de communication avec le terminal de conducteur déterminé (D).

2. Procédé selon la revendication 1, dans lequel les informations de position comprennent un angle et une distance.

3. Procédé selon la revendication 2, dans lequel la détermination d'un angle de l'au moins un terminal (A, B, C, D) par rapport au dispositif monté sur véhicule sur la base du signal sans fil comprend :
la détermination de l'angle de l'au moins un terminal (A, B, C, D) par rapport au dispositif monté sur véhicule sur la base d'un angle d'arrivée et/ou d'un angle de départ du signal sans fil.

4. Procédé selon la revendication 2, dans lequel la détermination d'une distance de l'au moins un terminal (A, B, C, D) par rapport au dispositif monté sur véhicule sur la base du signal sans fil comprend :
la détermination de la distance de l'au moins un terminal (A, B, C, D) par rapport au dispositif monté sur véhicule sur la base d'une intensité de signal du signal sans fil.

5. Procédé selon la revendication 2, dans lequel la détermination d'une distance de l'au moins un terminal (A, B, C, D) par rapport au dispositif monté sur véhicule sur la base du signal sans fil comprend :
la détermination de la distance de l'au moins un terminal (A, B, C, D) par rapport au dispositif monté sur véhicule sur la base d'un angle d'arrivée et/ou d'un angle de départ du signal sans fil.

6. Procédé selon la revendication 2, dans lequel la détermination d'une distance de l'au moins un terminal (A, B, C, D) par rapport au dispositif monté sur véhicule sur la base du signal sans fil comprend :
la détermination de la distance de l'au moins un terminal (A, B, C, D) par rapport au dispositif monté sur véhicule sur la base d'une intensité de signal et d'un angle d'arrivée et/ou d'un angle de départ du signal sans fil.

7. Procédé selon la revendication 1, dans lequel le fait de déterminer (S303), sur la base des informations de position de l'au moins un terminal (A, B, C, D) par rapport au dispositif monté sur véhicule, si le terminal se trouve dans une zone de position de conducteur comprend en outre :
si un angle du terminal (A, B, C, D) par rapport au dispositif monté sur véhicule correspond à un angle d'une position de conducteur par rapport au dispositif monté sur véhicule, et qu'une distance du terminal par rapport au dispositif monté sur véhicule est inférieure ou égale à une distance prédéfinie, la détermination que le terminal se trouve dans la zone de position de conducteur.

8. Procédé selon la revendication 1, dans lequel la détermination (S303) d'un terminal de conducteur (D) dans l'au moins un terminal (A, B, C, D) sur la base des informations de position de l'au moins un terminal par rapport au dispositif monté sur véhicule comprend :

si une distance du terminal par rapport au dispositif monté sur véhicule est inférieure ou égale à une distance prédéfinie, et qu'un angle du terminal par rapport au dispositif monté sur véhicule devient plus grand d'un moment historique à un moment actuel, la détermination du terminal comme terminal de conducteur (D), dans lequel

l'angle du terminal par rapport au dispositif monté sur véhicule comprend un angle entre une direction allant du dispositif monté sur véhicule au terminal et une première direction de référence, la première direction de

EP 4 024 905 B1

référence est parallèle à un plan de carrosserie de véhicule et va du dispositif monté sur véhicule vers un côté gauche du véhicule, et un intervalle de temps entre le moment historique et le moment actuel est inférieur ou égal à un temps prédéfini.

9. Procédé selon la revendication 1, dans lequel la détermination (S303) d'un terminal de conducteur (D) dans l'au moins un terminal sur la base des informations de position de l'au moins un terminal par rapport au dispositif monté sur véhicule comprend :

si un angle du terminal par rapport au dispositif monté sur véhicule devient plus grand lorsque le terminal se trouve dans une zone de position de conducteur, la détermination du terminal comme terminal de conducteur (D), dans lequel

l'angle du terminal par rapport au dispositif monté sur véhicule comprend un angle entre une direction allant du dispositif monté sur véhicule au terminal et une première direction de référence,

et la première direction de référence est parallèle à un plan de carrosserie de véhicule et va du dispositif monté sur véhicule vers un côté gauche du véhicule.

10. Procédé selon la revendication 1 ou 2, dans lequel l'au moins un terminal (A, B, C, D) comprend un premier terminal et un second terminal ;

un angle du premier terminal par rapport au dispositif monté sur véhicule comprend un premier angle entre une première direction allant du dispositif monté sur véhicule au premier terminal et une première direction de référence, et la première direction de référence est parallèle à un plan de carrosserie de véhicule et va du dispositif monté sur véhicule vers un côté gauche du véhicule ; et

un angle du second terminal par rapport au dispositif monté sur véhicule comprend un second angle entre une seconde direction allant du dispositif monté sur véhicule au second terminal et la première direction de référence.

11. Procédé selon la revendication 10, dans lequel la détermination (S303) d'un terminal de conducteur (D) dans l'au moins un terminal (A, B, C, D) sur la base des informations de position de l'au moins un terminal par rapport au dispositif monté sur véhicule comprend en outre :

si une distance du premier terminal par rapport au dispositif monté sur véhicule est inférieure ou égale à une distance prédéfinie, une distance du second terminal par rapport au dispositif monté sur véhicule est supérieure à la distance prédéfinie, et le premier angle est compris entre une première plage d'angles prédéfinie, la détermination du premier terminal comme terminal de conducteur (D).

12. Procédé selon la revendication 10, dans lequel la détermination (S303) d'un terminal de conducteur (D) dans l'au moins un terminal (A, B, C, D) sur la base des informations de position de l'au moins un terminal par rapport au dispositif monté sur véhicule comprend en outre :

si une distance du premier terminal par rapport au dispositif monté sur véhicule et une distance du second terminal par rapport au dispositif monté sur véhicule sont toutes deux inférieures ou égales à une distance prédéfinie, le premier angle est inférieur au second angle, et un premier angle inclus entre la première direction et la seconde direction est supérieur à un seuil d'angle prédéfini, la détermination du premier terminal comme terminal de conducteur (D).

13. Appareil de communication (150), comprenant un processeur (151) et un émetteur-récepteur (155), dans lequel le processeur et l'émetteur-récepteur communiquent l'un avec l'autre via une connexion interne, et le processeur est configuré pour exécuter une étape de traitement dans le procédé selon l'une quelconque des revendications 1 à 12.

14. Support de stockage lisible par ordinateur, configuré pour stocker un programme informatique, dans lequel le programme informatique comprend des instructions utilisées pour exécuter le procédé selon l'une quelconque des revendications 1 à 12.

FIG. 1

FIG. 2

Detect a wireless signal sent by at least one terminal in a vehicle — S301

Determine position information of the at least one terminal relative to a vehicle-mounted device based on the wireless signal — S302

Determine a driver terminal in the at least one terminal based on the position information of the at least one terminal relative to the vehicle-mounted device, and establish a communication connection to the driver terminal — S303

FIG. 3

In-vehicle infotainment | Terminal A | Terminal B

Send an AOA broadcast signal

The in-vehicle infotainment is powered on

Send an AOA broadcast signal

Send an AOA broadcast signal

The in-vehicle infotainment is started

Send an AOA broadcast signal

Send an AOA broadcast signal

Receive AOA broadcasts sent by one or more terminals

Send an AOA broadcast signal

Send an AOA broadcast signal

Send an AOA broadcast signal

Send an AOA broadcast signal

Send an AOA broadcast signal

Send an AOA broadcast signal

1. AOA calculation
2. Distance calculation
3. An AOA and a distance of the terminal A are within a required range

Connected to the terminal A

FIG. 4

Wireless signal

Antenna 2

Antenna 1

d

θ

FIG. 5

| Terminal | | In-vehicle infotainment |
|---|---|---|

Wireless signal →

Detect a received signal strength indication

Predict a change to the received signal strength indication by using a moving average method

Eliminate an error in the received signal strength indication through Kalman filtering

Calculate a distance of the terminal relative to the in-vehicle infotainment based on a distance path loss model

FIG. 6

Wireless signal    Wireless signal

$\theta2$    $\theta1$

| Bluetooth module 2 | ←——— D ———→ | Bluetooth module 1 |

FIG. 7

In-vehicle
infotainment

Z

$\alpha 2$

Terminal

Y

$\alpha 1$

O

80

X

FIG. 8

Y

In-vehicle
infotainment

$\alpha 3$

O

$\alpha 4$

Terminal

X

FIG. 9

FIG. 10

FIG. 11

Second quadrant

Third quadrant

20

In-vehicle
infotainment

B

D

O

β3

Y

β2

22

A

C

Fourth quadrant

First quadrant

X

FIG. 12

FIG. 13

FIG. 14

150

151

Processor

Instructions

153

152

Memory

Instructions

154

Transceiver

155

FIG. 15

Communications apparatus

1601

1602

Detection module

First determining
module

Second determining
module

1603

Connection module

1604

160

FIG. 16

172    173

Communications
apparatus

170

Processor

Transceiver
apparatus

Memory

171

FIG. 17

1000

Input interface circuit

1002

Logic circuit

1004

1008

Output interface circuit

Transceiver

1010

1006

FIG. 18

**EP 4 024 905 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910906017

- US 2017276764 A1